# EUROPEAN PATENT APPLICATION

(11) **EP 4 763 754 A1**
(43) Date of publication of application: **24.06.2026**
(21) Application number: 25225345.5
(22) Date of filing: 18.12.2025
(51) Int. Cl.: B65G 29/00, B65G 47/52, B65G 47/53, B65G 47/80, G01N 35/04, B65G 47/84, G01N 35/00

(54) **TRANSPORT SYSTEM WITH A MECHANICALLY PASSIVE GATE MECHANISM FOR TRANSPORTING CARRIERS AND METHOD FOR TRANSPORTING CARRIERS**

(30) Priority: 18.12.2024 EP 24221200
(71) Applicant: Beckman Coulter, Inc., Brea, CA 92821 (US)
(72) Inventor: KRAFCZYK, Thomas, Brea, 92821 (US); MUELLER, Martin, Brea, 92821 (US); ADOLF, Maximilian, Brea, 92821 (US)
(74) Representative: Paustian & Partner Patentanwälte mbB

(57) **Abstract**

The present disclosure relates to a transport system (100) for transporting carriers (200a, 200b, 200c, 200d, 200b, 200f), wherein the system (100) comprises a first transport device (123), being configured to transport carriers (200a, 200b) along a first path (10) at a given first velocity (v1); a second transport device (102) comprising at least one recess configured to receive a carrier (200a, 200b, 200c, 200d, 200e, 200f), and configured to move the at least one recess (111) along a second path (20) at a given second velocity (v2); a transferring region (150) for transferring carrier (200a, 200b) from the first transport device (123) to the second transport device (102); and a mechanically passive gate mechanism (125), configured, during operation of the transport system (100) and under given conditions, to mechanically interrupt at least temporarily a movement of a first carrier (200a) moving with the given first velocity (v1) along the first path (10).

## Description

### TECHNICAL FIELD

The present disclosure generally relates to transport systems for transporting carriers, in particular for transporting carriers configured to receive one or more tubes for biological samples, wherein the transport system comprises a first transport device, being configured to transport carriers along a first path at a given first velocity, or being configured to direct carriers along a first path which are being self-propelled and configured to move at a given first velocity; a second transport device comprising at least one recess, wherein the at least one recess is configured to receive a carrier, and wherein the second transport device is configured to move the at least one recess along a second path at a given second velocity; a transferring region for transferring at least one carrier from the first transport device to the second transport device; and a gate mechanism.

Further, the present disclosure relates to a method for transporting carriers.

### BACKGROUND

Transport systems for carriers, in particular for transporting carriers configured to receive one or more tubes for biological samples, and methods for transporting carriers are in general well known form prior art. Several concepts exist, in particular comprising gate mechanisms to control the transport of carriers into the transferring region.

Against this background, the technical problem underlying the present disclosure is to provide an alternative, in particular an improved, transport system, and an alternative, in particular improved, method for transporting carriers, in particular with an alternative gate mechanism, allowing to control the transport of carriers into the transferring region in an easy and efficient manner.

### SUMMARY

With respect to the above, a transport system for transporting carriers, and a method for transporting carriers according to the respective independent patent claims are provided, wherein the transport system comprises a mechanically passive gate mechanism. Advantageous embodiments are defined by the dependent patent claims, the description, and the figures.

A first aspect of the present disclosure refers to a transport system for transporting carriers, in particular for automated movement of carriers configured for receiving a tube containing a biological sample between various workstations, wherein the transport system comprises a first transport device, a second transport device, a transferring region and a mechanically passive gate mechanism.

In some examples, the first transport device is configured to transport carriers along a first path at a given first velocity. In some examples the first transport device is configured to direct carriers along a first path, those carriers being self-propelled and configured to move at a given first velocity.

The second transport device comprises at least one recess, wherein the at least one recess is configured to receive a carrier. The second transport device is further configured to move the at least one recess along a second path at a given second velocity.

The transferring region is configured for transferring at least one carrier from the first transport device to the second transport device.

In particular, the mechanically passive gate mechanism is configured, during operation of the transport system, to mechanically interrupt at least temporarily, a movement of a first carrier moving with the given first velocity along the first path.

In some examples, the transport system is configured such that, during operation of the transport system, the movement of the first carrier with the given first velocity is interrupted at least temporarily by the mechanically passive gate mechanism at least in the first direction along the first path, wherein the transport system may in particular be configured such that the movement of the first carrier may be interrupted at least temporarily at a defined carrier position (herein also referred to as: "carrier waiting position" or .

In some examples, during operation of the transport system, the transport system is configured such that:
if no carrier is already disposed in the recess and whilst the second transport device is moving the recess along a defined first portion of the second path over a defined first length at the given second velocity, e.g., for interruption of the movement of the first carrier, the second transport device, in particular a portion of an outer wall of the second transport device, is mechanically engaging with the mechanically passive gate mechanism, thereby causing the mechanically passive gate mechanism to mechanically prevent the first carrier from moving at least from a carrier position at least in a first direction along the first path at least with the first velocity;
and/or such that:
if the recess is already occupied by a further carrier disposed within the recess and whilst the second transport device is moving the recess with the further carrier disposed therein along a defined second portion of the second path over a defined second length at the given second velocity, e.g., for interruption of the movement of the first carrier, the further carrier disposed in the recess is mechanically engaging with the mechanically passive gate mechanism, thereby causing the mechanically passive gate mechanism to mechanically prevent the first carrier from moving at least from the carrier position at least in the first direction along the first path at least with the first velocity.

The mechanically passive gate mechanism, in particular the mechanical engagement of that mechanism with the second transport device, allows for interrupting, at least temporarily and in a very easy manner, a movement of the first carrier with the first velocity along the first path, whereby the first carrier may in particular be decelerated or stopped, at least temporarily. This allows to adjust, in particular to control, the arrival time, i.e., the time point of arrival, of said first carrier in the transferring region. As a result, the transfer of the carrier from the first transport device to the second transport device can be improved.

The transport system allows, in operation, in particular with an appropriate design of the first and second transport devices and appropriate chosen values for the first and second velocities, to feed carriers into the transferring region via the first path such that they arrive in the transferring region only, when an empty, unoccupied recess is in the transferring region or passes the transferring region, thereby enabling the carrier to be received in the recess at least without substantial delay, in particular without any delay and in a very smooth manner, in particular without collision of the carrier with the second transport device or with a carrier already occupying a recess, and/or without causing any jam in the transferring region or along the first path.

The adjustment or control of the "arrival time" can in particular be achieved by a temporary mechanical "blocking" or deceleration of the first carrier along the first path, in particular, advantageously, at a defined position, i.e., at the carrier waiting position, along the first path.

In some examples, the movement of the carrier along the first path may in particular be interrupted, i.e. at least decelerated or stopped (i.e., decelerated to a velocity of 0), by a temporary mechanical "blocking" or mechanical deceleration of the first carrier, in particular by a mechanical engagement of the mechanically passive gate mechanism with that carrier. The engagement between the gate mechanism and the carrier may in particular be caused in response to a mechanical engagement of the second transport device with the mechanically passive gate mechanism. The mechanically passive gate mechanism may in particular have a defined kinematic being adapted to the design and dimensions of the first transport device and the second transport device and their arrangement relatively to one another, and/or in particular in dependence of the first velocity and the second velocity of the first and second transport devices.

In particular, the mechanically-causable temporary interruption of the movement of the first carrier may reduce, e.g., eliminates, a risk of collision of the carrier with the second transport device, e.g., at or in the vicinity of the recess, in particular, when no further carrier is already disposed in the recess, i.e. when the recess is empty whilst the second transport device is moving the recess along the defined first portion of the second path over the defined first length at the given second velocity. Such collisions may harm and/or cause spilling of a biological sample received included in a tube carried by the first carrier. Hence, by avoiding those collisions, transport safety may be improved.

Further, the transport system according to the present disclosure, may reduce, e.g., avoid, the risk of a jam in the transferring region and/or in the vicinity of that region along the first path. Such jams might lead to wrongly directed carriers and/or cause an interlocking between queuing carriers. Hence, avoiding those jams improves transport quality.

The use of a pure mechanically driven gate mechanism, that is the use of a passive gate mechanism, has the advantage that no difficult control is necessary. Once the design of the mechanically gate mechanism is determined and realized, in particular if the design and dimensions and its kinematic are adapted to the design and dimensions of the transport system, and/or to the first velocity and the second velocity, a reliable mechanical control of the feeding of carriers via the first path into the transferring region for transfer to the second transport device, can be provided. Such control of a transport system requires low maintenance, in particular compared to active driven gate mechanisms.

A mechanically passive gate mechanism may further allow, if designed appropriately, a smoother movement of the carriers along the first path and/or a smoother entry into the recess, thereby protecting samples, in particular biological samples being transported via the carriers.

By the mechanically caused temporary interruption of the first carrier, if a further carrier is already disposed in the recess, i.e. if the recess is already occupied by another carrier, whilst the second transport device is moving the recess along a defined second portion of the second path over a second length, a risk of collision of the carrier with the second transport device can be reduced, in particular eliminated, wherein thereby in particular a collision with the carrier occupying the recess and with the second transport device in an area next to the recess can be avoided.

As mentioned above, since such a collision might harm, for example, a biological sample received in a tube, which is received by the carrier for being transported, by avoiding collisions, the transport quality may be improved.

The risk of a jam in the transferring zone and/or adjacent to it backwards along the first path, may also be reduced or avoided.

The use of the mechanically driven gate mechanism for control of the arrival time of the first carrier in the transferring region, has, as mentioned above, the advantage that no difficult control is necessary. Such a control of a transport system requires low maintenance, in particular compared to active driven gate mechanisms, and may further allow, if designed appropriate, a smoother movement of the carriers along the first path and/or a smoother entry into the recess, thereby protecting samples, in particular biological samples being transported via the carriers.

Exemplarily, the transport system may be configured such that the mechanically passive gate mechanism may be configured to prevent the movement of a first carrier in the operation states as described above, i.e. when one of the two if-conditions described above is fulfilled. Since a recess cannot be simultaneously unoccupied, i.e., empty, and occupied, those if-conditions have not to be fulfilled at the same time. For example, during operation, the first condition may be fulfilled at a first time point, i.e., at a time point when no further carrier is already disposed in the recess and whilst the second transport device is moving the recess along a defined first portion of the second path over the defined first length at the given second velocity. During operation, the second condition, instead, may be fulfilled at a second time point, different from the first time point, i.e., at a time point when the recess is already occupied by a further carrier disposed within the recess and whilst the second transport device is moving the recess with the further carrier disposed therein along the defined second portion of the second path over the defined second length at the given second velocity.

In some examples, the transport system may be configured to prevent the movement of a first carrier as described only if one of these two if-conditions described above is fulfilled.

In the context of the present disclosure, a transport system is in particular a system for transporting objects, i.e. for moving objects from one location to another. Accordingly, a transport system for transporting carriers is in particular a transport system for transporting carriers. The transport system of the present disclosure may in particular be configured for use in a laboratory and may thus be a laboratory transport system. The transport system may in particular be a transport system for automated movement of carriers, in particular in a laboratory, wherein the transport system may in particular be configured for transporting carriers automatically between various workstations. For this purpose, the transport system may comprise a network of transport devices such as conveyors, robotic arms, and/or of one or more further components like sensors, cameras or the like.

In the context of the present disclosure, a carrier is in particular a device configured to receive at least one or exactly one object to be transported. In particular, according to the present disclosure, a carrier may have a design and dimensions which are adapted to the object for proper receipt of that object for transportation. In the context of the present application, a carrier may in particular be configured for receiving at least one tube, in particular exactly one tube, wherein the tube may in particular contain a biological sample. Carriers may be configured as a holder that safely hold containers, e.g., tubes, containing biological samples. A carrier may in particular be compatible with different transport devices and/or transferring devices within a transport system to enable quick, efficient, and safe transport between the several locations and workstations in a laboratory.

According to the present disclosure, a carrier may be configured to be moved by an actively driven transport device or may be self-propelled, i.e., configured to move on its own. In particular, a self-propelled carrier comprises at least one drive for moving that carrier. If a carrier is self-propelled, the transport device may, but it has not, in addition move said carrier actively. In particular, a transport device for transporting self-propelled carriers may comprise means for directing and/or guiding the self-propelled carrier along a transportation path of said transport device. For example, if the first carrier is self-propelled, the first transport device may comprise means for directing and/or guiding the first carrier along the first path.

A carrier may in particular be configured for receiving a tube containing a biological sample, and may be transported, for example, via a conveyor, and/or a turntable, which may transport the carrier to designated locations, such as centrifuges, analyzers, storage units or the like.

The transport system may be configured to move occupied carriers, i.e., carriers holding a received object like a tube, and/or unoccupied carriers, i.e., carriers not holding any objects. Herein, the latter carriers may also be referred to as empty or free carriers. In particular, the transport system may be configured to transport carriers with a defined size, in particular with a defined diameter, in particular with a diameter greater than a defined minimum diameter and/or with a diameter smaller than a defined maximum diameter. The transport system is in particular configured to transport carriers that are at least large enough to protrude beyond an outer circumference of the recess with at least one contact surface facing outwards, in particular radially outwards, when they are properly positioned in the recess.

In the context of the present disclosure, a transport device is in particular a device within the transport system, which is configured to transport an object, in particular one or more carriers, from one location to another, in particular along a defined (transportation) path. In particular, a transport device may be a straight and/or curved, extended device, which is configured to transport objects, in particular carriers, along a certain straight and/or curved distance, i.e., along a straight and/or curved (transportation) path. The transport devices according to the present disclosure may be used, in particular, in the biological and/or chemical industry to move occupied carriers (carriers holding a tube) and/or unoccupied carriers (carriers not holding any tubes) between different workstations such as a centrifuge, an analyzer, a storage unit, a freezer, and/or a dispatch station etc. A transport device may comprise one or more conveying means, for instance, one or more of: a conveyor belt, a chain conveyor, an apron conveyer, a roller conveyor (optionally lineshaft-driven), and the like. Alternatively, or in addition, a transport device may comprise one or more rotating means, for example, a turntable. Two or more transport devices may be combined in a transport system. An exemplary combination of transport devices in a transport system is the combination of at least one linear transport device with a turntable. Another exemplary combination comprises at least two linear transport devices.

In the context of the present disclosure, a linear transport device is in particular a transport device configured to transport one or more objects, e.g., one or more carriers, from one location to another location along a linear (transportation) path.

According to the present disclosure, a turntable is in particular a transport device configured to rotate, and thereby transport, one or more objects, e.g., one or more carriers, from one location to another location a curved (transportation) path, in particular along a circular arc path and/or a circle.

The first transport device of the transport system according to the first aspect of the present disclosure, may in particular be a linear transport device. The second transport device may in particular be a turntable or a linear transport device.

In the context of the present disclosure, a path is in particular a defined or identifiable route or course along which one or more objects, e.g., one or more carriers, may be transported within the transportation system. A path may in particular represent the geometric trajectory connecting an origin to a destination and may in particular be a physical route.

In the context of the present disclosure, the first path is in particular the path along which carriers may be transported via the first transport device, and the term second path is in particular the path along which carriers may be transported via the second transport device.

According to the present disclosure, the first velocity is in particular the velocity by which carriers may be transported and/or directed along the first path, in particular via the first transport device. The second velocity is in particular the velocity by which carriers may be transported via the second transport device.

The first velocity and/or the second velocity may be constant along the corresponding path or may vary, e.g., in direction or value. In particular, the second transport device may be continuously driven and/or may continuously move the at least one recess along the second path. The second transport device may be configured to move the at least one recess step wise, in particular by using a step drive. A continuous movement of the at least one recess along the second path reduces and/or avoid unwanted acceleration and deceleration impulses on the carrier transported along the second path by the second transport device, and therewith potential harm or spilling of samples received in a tube hold by the carrier. In particular, both transport devices, i.e., the first transport device and the second transport device, may be configured to continuously move recesses along the first path and the second path, respectively. The first velocity and the second velocity may be different from one another.

Exemplarily, the first transport device and the second transport device may be configured to be operated simultaneously, in particular continuously, in particular with different speed.

For example, the design and dimensions of the first transport device, of the second transport device, of the transferring region, and of the mechanically passive gate mechanism are adapted to one another and spatially arranged relatively to one another such that during operation of the transport system, the arrival of a carrier moving with the given first velocity along the first path is synchronized with the arrival of an unoccupied recess in the transferring region, thereby allowing a smooth entry of that carrier into the recess.

A first velocity may therein in particular be in a range from 50 or 100 mm/s to 150 or 200 m/s, in particular about 150 mm/s, and a second velocity may in particular be in a range from 10 to 20 degrees/s, for example about 15 degrees/s, in particular in between 15 to degrees/s, for example 16.2 degrees/s, wherein second transport device may have a diameter of 500 to 600 mm, for example 580 mm.

In the context of the present disclosure, the transferring region is in particular the region where the first path and second path overlap.

In the context of the present disclosure, the term "mechanically passive gate mechanism" may be used synonymously with the term "passive-mechanically controlled (gate) mechanism". According to the present disclosure, the mechanically passive gate mechanism is in particular a passive gate mechanism, i.e., a gate mechanism without an active drive. In particular, the gate mechanism is able to control an entry of a carrier from the first transport device into the recess of the second transport device pure mechanically, in particular due to its kinematics, and in particular without any electronic actuation means controlling the gate mechanism itself.

In some examples, the mechanically passive gate mechanism may be configured as entry gate, wherein the gate mechanism may in particular be disposed in an entry area of the second transport device near the transferring region and along or beside the first path of the first transport device, so to control the entry of carriers moving along the first path towards or into the transferring region.

In case a transport device comprises one or more first paths, for example because of one or more transportation lanes of the first transport device, the transport device may comprise more than one mechanically passive gate mechanism, in particular one for each lane.

The gate mechanism is in particular mechanically passive controllable only. For example, during operation of the transport system, the gate mechanism is in particular configured to enter temporarily several different states, in particular different kinematic positions. For instance, the gate mechanism may enter temporarily at least one interruption position, in particular at least two interruption positions, by which a movement of a first carrier moving along the first path with the first velocity can temporarily be interrupted, in particular at the carrier waiting position. Herein the interruption positions may also be referred to as: "entry-blocking positions".

Further, during operation of the transport system, the mechanically passive gate mechanism may enter temporarily at least one "released position", in which an interruption of a movement of a first carrier moving along the first path with the first velocity is terminated or no interruption occurs, thereby allowing a first carrier to move or to continue its movement along the first path in the first direction, in particular from the carrier position, and/or allowing a carrier moving along the first pass to pass the gate mechanism along the first path in the first direction.

When the mechanically passive gate mechanism is in the interruption position, the gate mechanism, in particular at least one element of said gate mechanism, may protrude into the first path and therewith into the transport path of the first carrier. In particular, in that interruption position said protruding element is at least temporarily fixed in its position, thereby enabling a mechanical interruption or "blocking" of the movement of the first carrier along the first path in the first direction during operation of the transport system. This interruption or "blocking" is in place as long as the protruding element is fixed in its position and prevented from moving out of the transport path. As a result, in this case, a carrier being transported along the first path is prevented from entering the transferring region, as the carrier may in particular be decelerated or stopped by the mechanically passive gate mechanism.

When the mechanically passive gate mechanisms is in the releasing position, the gate mechanism, in particular the protruding element of the gate mechanism, may be released such that it is movable (again), thereby enabling the protruding element to move out of the transport path and allowing the carrier to continue its movement, in particular from the carrier (waiting) position, and/or allowing another carrier moving along the first path to pass the gate mechanism along the first path.

The mechanically passive gate mechanism may be configured to enter the interruption position and/or the releasing position in one or more operation situations of the transport system. Thus, in particular, the mechanically passive gate mechanism is configured to enter the interruption position and/or the releasing position "conditionally", i.e., when specific conditions during operation of the transport system are fulfilled.

The kinematic movement of the gate mechanism is in particular mechanically coupled to and/or synchronized with the movement of the second transport device.

In particular, the gate mechanism is configured and controlled in a way that a carrier only reaches the transferring region or arrives in the transferring region when an unoccupied recess of the second transport device reaches the transferring region or is provided there and ready to receive the carrier. As a result, jamming of carriers due to improper reception by the second transport device can be prevented.

For instance, the mechanically passive gate mechanism may be further configured to prevent movement of a carrier not only in the first direction along the first path towards the transferring region, but also in the opposite direction, i.e. backwards. This may be achieved, e.g. by blocking a movement of the protruding element in the opposite direction along the first path also.

In some examples, the transport system may be configured such that, during operation of the transport system:
if the recess is already occupied by a further carrier disposed within the recess and if the mechanically passive gate mechanism is mechanically disengaged from the second transport device and the further carrier, the first carrier is moving from the carrier position along the first path at the given first velocity in the given direction towards the transferring region and the recess is positioned along the second path such that the first carrier is in the transferring region when the recess is at least partly located outside the transferring region, thereby precluding the reception of the first carrier into the recess;
if the recess is in a first recess position and if the recess is unoccupied and if the mechanically passive gate mechanism is mechanically disengaged from the second transport device the first carrier is moving from the carrier position along the first path at the given first velocity in the given direction towards the transferring region so that the first carrier enters the recess at the transferring region.

In some examples, the transport system according to the first aspect of the present disclosure may be configured such that, during its operation, a movement of the first carrier with the given first velocity along the first path is not interrupted at least in the first direction or an interruption at least in the first direction of the movement of the first carrier with the given first velocity along the first path is terminated, at least under one of the following conditions:
if the recess is unoccupied and no further carrier is located in the recess, when the recess reaches a first recess position along the second path, in particular after the second transport device has moved the recess along the defined first portion of the second path over the defined first length at the given second velocity; and
if the recess is occupied by the further carrier disposed within the recess, and the occupied recess has been moved along the second path, and in particular after the occupied recess has passed the first recess position, such that when the first carrier reaches the transferring region, the occupied recess is already at least partly located outside the transferring region, thereby precluding the reception of the first carrier into the recess.

In particular, the interruption of the movement of the first carrier may be terminated, when the mechanically passive gate mechanism is released, thereby causing the mechanically passive gate mechanism to mechanically allow the first carrier to continue moving, in particular at least from a carrier waiting position, in the first direction along the first path. In particular, the mechanically passive gate mechanism is activated when it prevents a carrier positioned at the carrier waiting position from moving from that position in the first direction along the first path with the first velocity.

The release and activation of the mechanically passive gate mechanism allows for to better adjusting, in particular for better controlling, the arrival time, i.e. the time point of arrival, of the first carrier in the transferring region. As a result, the transfer of the carrier from the first transport device to the second transport device can further be improved.

In particular, during operation of the transport system and when the recess is unoccupied, a release of the gate mechanism and thereby a termination of the interruption of the carrier movement along the first path may be triggered when the recess is in the first recess position (herein also referred to as. "first releasing position") along the second path.

In some examples, the second transport device comprises a plurality of recesses, wherein the plurality of recesses comprising the recess. In particular, the second transporting device is configured to move each recess of the plurality of recesses along the second path at the given second velocity in a given direction. In those examples, in particular if the recess is occupied, the release of the gate mechanism is triggered only when an unoccupied recess following the occupied recess along the second path approaches the gate mechanism.

In particular, during operation of the transport system and when the recess is occupied by a further carrier, a release of the gate mechanism and thereby a termination of the interruption of the carrier movement along the first path may be triggered when the recess is in a second recess position, e.g., different from the first recess position, along the second path. In particular, the second recess position depends on the occupancy of the recesses of the plurality of recesses of the second transport device.

The transport system may in particular be configured such that no interruption occurs and/or the interruption is terminated, when the mechanically passive gate mechanism is released, i.e. when the gate mechanism is in a "releasing state", thereby causing the mechanically passive gate mechanism to mechanically allow the first carrier to move and or continue moving, from the carrier waiting position in the first direction along the first path, in particular (again) with the given first velocity.

In the context of the present application, in particular in the context of the mechanically passive gate mechanism, the expression "is released" means in particular that the gate mechanism is in a configuration or state, in particular in a kinematic position, in which a movement of the carrier along the first path is not interrupted, i.e. neither decelerated nor stopped at least in the first direction along the first path. However, it has to be noted that, for the gate mechanism to be released, the components of the transport system do not need to be unengaged (e.g., not in contact) with one another. This means, in particular, that, in some examples, when the gate mechanism is released some of the components of the transport system may still be in contact with each other. For the gate mechanism being named as "released" it is already sufficient not to prevent a movement of a carrier along the first path in a first direction with a first velocity.

The mechanically passive gate mechanism may in particular be released, i.e., be in means in a releasing state in which the gate mechanism allows the first carrier to move or continue moving from the carrier waiting position, in the first direction along the first path, in particular (again) with the given first velocity. In this state, the mechanically passive gate mechanism may also allow a further first carrier, whose movement along the first path was, in particular, not interrupted by the mechanically passive gate mechanism in an interruption state, to move along the first path in the first direction continuously and to pass the carrier waiting position gate without an interruption of its movement by the gate mechanism. Such a "further first carrier" may be, for example, another carrier moving along the first path, in particular subsequently to the first carrier and/or following the first carrier.

By releasing the mechanically passive gate mechanism as described above, a carrier moving along the first path towards the second transport device will only arrive in the transferring region when an unoccupied recess of the second transport device is available for receiving that carrier. This avoids collision among carriers and/or jams along the first path, and allows a smooth entry, in particular just in time entry, of the first carrier into the recess of the second transport device. Hence, the transport quality may be improved and the risk of harm to the objects, e.g., tubes, held by the carriers, can be reduced.

For example,, the transport system may be configured such that the mechanically passive gate mechanism may be configured to be released in the operation states as described above, i.e. when one of the two if-conditions for release as described above is fulfilled. Since a recess cannot be unoccupied, i.e. in particular empty, and occupied simultaneously, the if-conditions for release have not to be fulfilled at the same time. However, and for example, in a first moment during operation of the transport system the first if-condition for release may be fulfilled, and in a second moment, the second if-condition for release.

In some examples, the transport system may be configured to prevent the movement of a first carrier as described only if one of these two if-conditions for release is fulfilled.

For instance, the mechanically passive gate mechanism is released, at least, if the recess reaches the first recess position.

In some examples of the transport system according to the first aspect of the present disclosure, the defined first length and the defined second length are different from each other, wherein in particular the defined second length is longer than defined the first length. In particular, the defined first portion of the second path may be comprised in the defined second portion of the second path.

Via the adjustment of the design and dimensions of the gate mechanism and its spatial arrangement within the transport system, the time point(s) at which the gate mechanism enters an interruption position and the time points at which the gate mechanism enters the releasing position can be mechanically controlled, and thereby the arrival time of a carrier and of a recess, e.g., an unoccupied recess, in the transferring region can be controlled and in particular coordinated with one another so that that carrier can enter the recess, if unoccupied.

Exemplarily, if the recess is unoccupied, the gate mechanism is in an interruption position for a first time period which is smaller than a second time period, the second time period is the time period during which the gate mechanism is in an interruption position when the recess is occupied. The second time period may in particular correspond to the amount of time needed by the occupied recess to move past the transferring region.

In some examples, the gate mechanism may in particular be released at the first recess position.

For example, the first recess position may in particular be located within the transferring region and/or shortly before the transferring region along the second path, wherein the position of the first recess position in particular may depend from the distance of the carrier waiting position from the transferring region and the first velocity.

In some examples, the first recess position is such that when the carrier is moving with the first velocity along first path and the recess is moving with the second velocity along the second path, the first carrier moving along the first path with the first velocity reaches the transferring region in time with the unoccupied recess for smooth entry of the carrier into said unoccupied recess.

In some examples, the first path may in particular be a linear path, at least partially or over its complete length, i.e. a path following a linear pathway. The second path may be, for example, at least a portion of a circumference, at least partially or over its complete length, wherein in this case the given second velocity may in particular be a given angular velocity. Also, other configurations and designs of the transport system, in particular of the first transport device, are possible. This allows to provide a very flexible and therewith advantageous transport system.

In some examples, the second path may be at least a portion of a circumference, at least partially or over its complete length, wherein in this case the given second velocity may in particular be a given angular velocity. This allows to provide a very flexible and therewith advantageous transport system, in particular in combination with a linear first path.

As already mentioned above, the first transport device of the transport system according to the first aspect of the present disclosure may in particular be a linear transport device. The second transport device may in particular be a turntable.

Exemplarily, the first transport device may comprise or be a conveyor belt with a defined slip such that blocking or interrupting of the first carrier causes slip between the carrier and the conveyor belt, thereby allowing to prevent further movement of that carrier without interruption or deceleration of the movement of the conveyor belt.

Alternatively, or additionally, the first transport device may at least be decelerated and/or its movement may be interrupted. This may in particular advantageous if the transport system is operated with a first velocity over a defined threshold, in particular if an interruption of the carrier movement of a carrier moving along the first path by the mechanically passive gate mechanism would otherwise cause an unwanted, in particular harming impulse when interrupting. The additional deceleration of the first transport device and/or the interruption of the movement of the first transport device might reduce such impulse, in particular if the velocity of the first transport device is controlled smoothly enough.

For instance, the second transport element may comprise a rotatable component, in particular a rotatable disc or disc-like component or a "wheel"-like component. The rotatable component may in particular comprise a wall, in particular an outside wall. In some examples during operation of the transport system, said component is turned by an active drive, thereby moving the recess along the second path, in particular with the given second velocity.

For improved efficiency, in particular for high throughput, the second transport system, in particular the wall, may comprise a plurality of recesses, wherein the plurality of recesses comprises the first recess. Each recess may be configured to receive a carrier, in particular exactly one carrier at a time.

During operation of the transport system, in particular in operation of the second transport device, the rotatable component may rotate around a first axis, in particular with the given angular velocity as the second velocity. The recesses of the plurality of recesses may in particular be arranged in a substantially azimuthally symmetric manner with respect to the first axis, in particular with a regular distribution along the circumference of the rotatable component. In operation, each recess may be moved along the second path at the given second velocity. This allows to provide a very flexible and therewith advantageous transport system, in particular for carriers configured to receive tubes for biological samples. With such a transport system, a very easy and efficient transport of carriers can be realized.

In particular, the second transport device and the mechanically passive gate mechanism may be designed and adapted to one another, such that at least one portion of the outer wall may mechanically engage with the gate mechanism at least in one operation situation of the transport system. During engagement of said portion of the outer wall with the mechanically passive gate mechanism, said portion contacts the mechanically gate mechanism, in particular at least one element of said gate mechanism, more particularly at least one movable element of the gate mechanism, thereby causing the gate mechanism to enter the interruption position. In particular, that portion of the outer wall extends in a circumferential direction between two recesses of the outer wall.

In some examples, the first path may extend on a first plane, and/or the second path may extend on a second plane, wherein the first plane and the second plane may in particular be parallel, at least substantially or exactly. The first path and the second path may alternatively extend in the same plane, i.e. be coplanar. The first path and the second path, or a tangent of the second path at the intersection of the first path and the second path, may include an angle in between, in particular an angle in the range of 10 to 170 degree, in particular from 20, 30, 40, 50, 60, 70 or 80 degrees up to 90, 100, 110, 120, 130, 140, 150, or 160 degrees.

In some examples, the second path may be a linear path, at least partially or over its complete length, i.e. a path following a linear pathway. Also, other configurations and designs of the transport system, in particular of the first transport device, are possible. This may be advantageous in some situations and/or use cases.

For example, the first path and the second path, both may be a linear path, at least partially or over their complete length, i.e. a path following a linear pathway. This may be advantageous in some situations and/or use cases.

Exemplarily, the transport system according to the first aspect of the present disclosure may in particular be configured to interrupt a movement of the first carrier along the first path and/or to terminate interruption of the movement of the first carrier such that, during operation of the transport system:
if the recess is unoccupied and no further carrier is located in the recess, the first carrier reaches the transferring region when the unoccupied recess is in the transferring region or is passing through the transferring region along the second path, thereby allowing the first carrier to enter the unoccupied recess, in particular in time for allowing a smooth entry of the carrier into the unoccupied recess;
and/or such that:
if the recess is occupied by a further carrier disposed within the recess, the first carrier only reaches the transferring region when the recess with the further carrier disposed therein is located outside the transferring region along the second path, thereby preventing the further carrier from being received by the occupied recess.

This allows to adjust, in particular to control, the arrival time, i.e., the time point of arrival, of said first carrier in the transferring region, in particular in dependence on the availability of an unoccupied, empty recess ready to receive a carrier. As a result, the transfer of the carrier from the first transport device to the second transport device can be improved. In particular, when the recess passing through transferring region is already occupied, an arrival of the first carrier in the transferring region and therewith a collision of the carrier with the second transport device or with the carrier already occupying the recess.

In particular, the first carrier only reaches the transferring region when an unoccupied recess is in the transferring region along the second path. In particular, the transport system may be configured such that the movement of the first carrier along the first path may be interrupted by the mechanically passive gate mechanism until an unoccupied recess is available, thereby enabling the first carrier to reach the transferring region when the unoccupied s recess is in the transferring region or is passing through the transferring region along the second path, thereby allowing the first carrier to enter the unoccupied subsequent recess.

Exemplarily, the transport system according to the first aspect of the present disclosure may be configured such that, during its operation, the mechanically passive gate mechanism is released in particular in dependence on the given first velocity and the given second velocity, such that, if the recess is unoccupied and no further carrier is located in the recess, the first carrier, moving along the first path in the given direction with the given first velocity from the carrier position to the transferring region for transfer from the first transport device to the second transport device, reaches the transferring region when the unoccupied recess is also in the transferring region and/or passing through the transferring region along the second path, thereby allowing the first carrier to enter the unoccupied recess when the recess is in a receiving position along the second path, in particular in time for allowing a smooth entry of the carrier into the unoccupied recess.

This allows for improving the control of the arrival time, i.e., the time point of arrival, of said first carrier in the transferring region. As a result, the transfer of the carrier from the first transport device to the second transport device is improved.

In some examples, the mechanically passive gate mechanism may in particular comprise a first movable element and a second movable element. In particular the first movable element comprises or is a lever, wherein the lever is in particular at least partially pivotable around a second axis. For instance, the second movable element may comprise or be a separation wheel, wherein the separation wheel is in particular rotatable around a third axis.

This allows for the adjustment, in particular the control, of the arrival time, i.e. of the time point of arrival, of the first carrier in the transferring region in a very easy manner. As a result, the transfer of the carrier from the first transport device to the second transport device can be improved.

The transport system may in particular be configured such that the first movable element is mechanically engageable at least temporarily during operation of the transport system with the second transport device, in particular with a portion of an outer wall of the second transport device, and/or a carrier being disposed in the recess and occupying the recess, wherein the carrier which is disposed in the recess and occupying the recess, may for example be a further carrier, which has been transferred into the recess via a further transport device via another transferring region being located along the second path before the transferring region.

This allows to provide for the adjustment, in particular the control, of the arrival time, i.e. of the time point of arrival, of the first carrier in the transferring region in a very easy manner. As a result, the transfer of the carrier from the first transport device to the second transport device can be improved.

The transport system may in particular be configured such that the first movable element is mechanically engageable at least temporarily during operation of the transport system with the second transport device, in particular with a portion of an outer wall of the second transport device, and/or with a carrier disposed in the recess whilst the second transport device is moving the occupied recess along a defined portion of the second path over a defined length at the given second velocity.

This allows for the adjustment, in particular the control, of the arrival time, i.e. of the time point of arrival, of the first carrier in the transferring region in a very easy manner. As a result, the transfer of the carrier from the first transport device to the second transport device can be improved.

The first movable element and the second movable element may in particular be configured to mechanically engage with each other, at least temporarily during operation of the transport system, in particular such that the first movable element prevents at least temporarily a movement of the second movable element, thereby enabling the second movable element to mechanically prevent, at least temporarily, a carrier to move, e.g., from the carrier position, along the first path at least in the first direction. Thereby, in a very easy manner and in particular only mechanically, a movement of said carrier with the first velocity can be interrupted, in particular decelerated or stopped at least temporarily, in particular at least dependent on the second velocity. This in turn allows to adjust, in particular to control, the arrival time of said carrier in the transferring region. As a result, the transfer of the carrier from the first transport device to the second transport device can be improved. In particular, a jam in the transferring region or in the vicinity to that region can be avoided, or at least the risk thereof be reduced. The risk of collision of the carrier with the second transport device and/or a carrier occupying a recess is further reduced.

In some examples, the first transport device, the second transport device, and the mechanically passive gate mechanism, in particular the first movable element and the second movable element of the mechanically passive gate mechanism, are spatially positioned with respect to one another such that, at least in one state of the transport system, when the first carrier is at the carrier position along the first path, the mechanically passive gate mechanism, in particular the second movable element of the mechanically passive gate mechanism, is able to mechanically engage, at least temporarily, with the first carrier to mechanically prevent said first carrier to move from the carrier position along the first path in the first direction with the given first velocity.

Thereby, in a very easy and efficient manner and in particular pure mechanically, a movement of a carrier along the first path in the first direction may be prevented. This way, the movement of a carrier at the carrier position is interrupted, in particular blocked, in particular by the mechanically passive gate mechanism.

The design and dimensions of the gate mechanism, in particular of the part of that mechanism engaging with the carrier, may be such that a movement of the carrier in at least one additional direction may be prevented, for example in an opposite direction to the first direction, i.e. in a backward direction. Thereby, transport quality may be increased, as unwanted incidents like jams or interlocking of carriers because of backwards movements of some of those carriers along the first path may be reduced.

For example, the first transport device, the second transport device, and the mechanically passive gate mechanism, in particular the first movable element and the second movable element of the mechanically passive gate mechanism, may be spatially be positioned with respect to one another and the given first velocity and the given second velocity are such that during operation of the transport system:
if no further carrier is already disposed in the recess and whilst the second transport device is moving the recess along the defined first portion of the second path over the defined first length at the given second velocity, e.g., for interruption of the movement of the first carrier the second transport device, in particular a portion of an outer wall of the second transport device, is mechanically engaging with the first movable element of the mechanically passive gate mechanism, thereby causing the second movable element of the mechanically passive gate mechanism to mechanically prevent the first carrier from moving at least from the carrier position at least in the first direction along the first path at least with the first velocity; and/or
if the recess is already occupied by a further carrier disposed within the recess and whilst the second transport device is moving the recess with the further carrier disposed therein along the defined second portion of the second path over the defined second length at the given second velocity, e.g., for interruption of the movement of the first carrier, the further carrier disposed in the recess is mechanically engaging with the first movable element of the mechanically passive gate mechanism, thereby causing the second movable element of the mechanically passive gate mechanism to mechanically prevent the first carrier from moving at least from the carrier position at least in the first direction along the first path at least with the first velocity.

Thereby, in a very easy and efficient manner and in particular pure mechanically, a movement of a carrier along the first path in the first direction may be prevented. This way, the movement of a carrier at the carrier position is interrupted, in particular blocked, resulting in an efficient and easy control of the carrier movement along the first path. Thereby, transport quality may be increased, as unwanted incidents like jams or interlocking of carriers along the first path and/or in the transferring region may be reduced.

In some examples, the first transport device, the second transport device, and the mechanically passive gate mechanism, in particular the first movable element and the second movable element of the mechanically passive gate mechanism may be spatially positioned with respect to one another and the given first velocity value and the given second velocity value are such that, during operation of the transport system: the mechanically passive gate mechanism, in particular the first movable element of the mechanically passive gate mechanism, is disengaged from the second transport device, in particular from a portion of its outer wall, and/or from a carrier disposed in the recess, thereby releasing the mechanically passive gate mechanism and allowing the first carrier to move along the first path towards the second transport device, in particular from the carrier position, at least:
if the recess is unoccupied and no further carrier is located in the recess, when the recess reaches the first recess position, along the second path after the second transport device has moved the recess along the defined first portion of the second path over the defined first length at the given second velocity; and/or
if the recess is occupied by the further carrier disposed within the recess and the occupied recess has been moved along the second path, and in particular passed the first recess position, such that when the first carrier reaches the transferring region, the occupied recess is already, at least partly, located outside the transferring region, thereby precluding the reception of the first carrier into the recess.

It has to be noted that, for the gate mechanism to be released, the components of the transport system do not need to be unengaged (e.g., not in contact) with one another. In particular, when the gate mechanism is released, the second movable element is movable (again).

When the gate mechanism is in the released state, a (re-established) movement of the first carrier may cause a movement of the second moveable element, for example when the first carrier leaves the carrier position and/or passes the gate mechanism at the carrier position and/or moves away from the carrier position. In response to said initiated moving of the second movable element, a movement of the first movable element may be triggered or caused, which itself may further trigger or cause a disengagement between the first movable element and the second movable element.

This way, the releasing of the gate mechanism may be realized in an easy and efficient way. In particular the release of the gate mechanism is realized via the disengagement between the first movable element and the second transport device, and/or between the first movable element and the second movable element. In this state of the transport system, carriers moving along the first direction with the first given velocity may pass the gate as well, unless their movement is interrupted to improve or adapt their arrival time in the transferring region.

Exemplarily, the second movable element is rotatable around the third axis, and comprises a plurality of protrusions extending radially with respect to the third axis, wherein the plurality of protrusions is in particular arranged in an at least substantially or complete azimuthally symmetric manner with respect to the third axis, wherein the plurality of protrusions comprises a number of N protrusions with N in particular being an integer and N >1. N may in particular be 2, 3, 4, 5 or 6. More particularly, N may be equal to 4. The protrusions may in particular be regularly distributed in circumferential direction. The second movable element may in particular be a kind of "separation element", in particular kind of a "separation wheel", which is in particular substantially 360/N degrees rotationally symmetrical around the third axis.

With such a design of the second movable element, advantageous properties, in particular advantageous kinematic properties of the second movable element, and therewith of the mechanically passive gate mechanism, can be realized. The protrusions may help to separate carriers moving along the first path one after the other, in particular in a queue, because these protrusions may in particular be designed such that they may easily be inserted between to queueing carriers to separate them. This allows an improved adjustment of the timing for interruption and release of the mechanically passive gate mechanism and/or of the separation queuing carriers along the first path. This in particular allows to provide a mechanically passive gate mechanism, e.g., the second movable element thereof, which combines the interruption and release functionality and the separation functionality.

In some examples, the transport system according to the first aspect of the present disclosure may be configured such that, during its operation, when the mechanically passive gate mechanism is released and the first carrier is moving from the carrier position along the first path in the first direction with the first velocity, in particular towards the second transport device, in response to the carrier engaging with the second movable element, the movement of the first carrier is causing the second movable element to rotate by 360/N degrees around the third axis.

This may in particular cause the second movable element to disengage with the first movable element. In response to said carrier-initiated movement of the second movable element, a movement of the first movable element may be triggered or caused, which itself may further trigger or cause a disengagement between the first movable element and the second movable element.

This way an easy and efficient releasing of the gate mechanism can be realized. In particular the release of the gate mechanism is realized via the disengagement between the first movable element and the second transport device, and/or between the first movable element and the second movable element. In this state of the transport system, carriers moving along the first path in the first direction with the first given velocity may pass the gate as well, unless their movement is interrupted for improving

In particular, the second transport device is configured to transport carriers along the second path at the given second velocity.

In some examples, the transport system according to the first aspect of the present disclosure may be configured such that, during its operation, and if the recess is unoccupied and the mechanically passive gate mechanism is released and if the first movable element of the mechanically passive gate mechanism is mechanically disengaged from the second transport device, in particular from a portion of the wall of the second transport device, and from any further carrier transported by the second transport device (e.g., disposed in at least one other recess), and if the first movable element is mechanically engaged with the second movable element, a rotation of the second movable element caused by the first carrier passing the mechanically passive gate mechanism, causes the first movable element to pivot around the second axis, thereby mechanically disengaging the first movable element from the second movable element.

The rotation direction rotation of the second movable element is in particular opposite to the second direction, i.e., the direction of the movement of the recess along the second path. For example, the rotation of the second movable element is a rotation by 360/N degrees around the second axis.

This way, a disengagement between the first movable element and the second movable element of the gate mechanism can be achieved in an easy and efficient way. This disengagement brings the gate mechanism to a released state. In this state of the transport system, carriers moving along the first path in the first direction with the first given velocity may pass the gate as well, unless their movement is interrupted for improving and/or adapting their arrival time in the transferring region.

Exemplarily, the transport system according to the first aspect of the present disclosure may be configured such that, during its operation, when the second movable element is mechanically engaged with the first movable element and with the first carrier, a first protrusion of the second movable element is mechanically engaged with the first movable element and a second protrusion of the second movable element is mechanically engaged with that carrier.

Thereby, a temporary interruption or "blocking" of the movement of a carrier along the first path with the first velocity in the first direction can be realized in an easy and efficient way.

For example, in particular, a first protrusion and a second protrusion may be different from one another, may not be the same protrusion. In some examples the first protrusion and the second protrusion are the same protrusion of the plurality of

For instance, the transport system according to the first aspect of the present disclosure may further comprise a guiding element, wherein the first transport device, the second transport device, and the guiding element are spatially positioned with respect to one another, and the transport system is configured such that, during its operation, when the first carrier is moving along the first path at the given first velocity in the given direction into the transferring region with a first orientation, the guiding element is engaging a first engagement region of that carrier, thereby at least temporarily precluding a modification of the orientation of that carrier when the carrier is moving further, in particular when the carrier is entering the recess.

The transport system may in particular be configured such that, during its operation, when the first carrier is moving along the first path at the given first velocity in the given direction into the transferring region with a first orientation, the guiding element is able to engage or is engaging at least over a defined length along the first path with a first engagement region of that first carrier, thereby at least temporarily precluding a modification of the orientation of that first carrier during further movement of said first carrier along the first path in the first direction towards the transferring region, in particular until the first carrier (200a) entered the transferring region and/or the recess.

This helps to ensure that a carrier moving along the first path retains its orientation until it is fully received in the recess. The guiding element helps to provide a lateral guide to avoid that a carrier entering the recess is "climbing up" a recess flank and thereby changes its orientation, in particular its rotational orientation. For instance, the guiding element may just be a wall or a pair of opposite walls and/or one or more guiding grooves and/or protrusions. Also, other shapes of geometric elements like pins and the like may be able "to guide" the carrier during its movement along the first path as suggested.

In some examples, the transport system according to the first aspect of the present disclosure may further comprise an orientating element, wherein the first transport device, the second transport device, the guiding element and the orientating element are spatially positioned with respect to one another, and the transport system is configured such that, in operation, after the first carrier has been disposed in the recess at the transferring region in the given first orientation, when the second transport device is moving that first carrier after receipt by the recess along the second path at the given second velocity, a second engagement region of that carrier is mechanically engaging the orientating element, thereby orientating the first carrier in a given second orientation. In particular the orientation of the carrier may be changed during entry into the recess and/or immediately after the entry of the carrier into the recess of the second transport device.

In some examples, during operation of the transport systems the guiding element may collaborate with the wall of the recess to achieve this orientation and keep the given second orientation, e.g., by preventing the carrier from rotating along a longitudinal axis.

The defined orientation may help or be useful, e.g. in a subsequent process step, for example in a barcode reading step at a barcode reader station, in which the barcode has to be presented to a reader device in the correct orientation.

A method for transporting carriers according to the second aspect of the present disclosure comprises at least the following steps:
- transporting, by using a first transport device, carriers along a first path at a given first velocity or directing carriers along a first path which are being self-propelled and configured to move at a given first velocity;
- moving, by a second transport device, comprising at least one recess, the at least one recess along a second path at a given second velocity; wherein the at least one recess is configured to receive a carrier;
- mechanically interrupting, by a mechanically passive gate mechanism, at least temporarily a movement of a first carrier, which is moving with the given first velocity along the first path; and
- transferring, in a transferring region, at least one carrier from the first transport device to the second transport device,
wherein the movement of the first carrier with the given first velocity is interrupted at least temporarily, in particular at a defined carrier position, at least in the first direction along the first path:
if no further carrier is already disposed in the recess and whilst the second transport device is moving the recess along a defined first portion of the second path over a defined first length at the given second velocity, e.g., for interruption of the movement of the first carrier, the second transport device is mechanically engaging with the mechanically passive gate mechanism, thereby causing the mechanically passive gate mechanism to mechanically prevent the first carrier from moving at least from a carrier position at least in a first direction along the first path at least with the first velocity; and/or
if the recess is already occupied by a further carrier disposed within the recess and whilst the second transport device is moving the recess with the further carrier disposed therein along a defined second portion of the second path over a defined second length at the given second velocity, e.g., for interruption of the movement of the first carrier, the further carrier disposed in the recess is mechanically engaging with the mechanically passive gate mechanism, thereby causing the mechanically passive gate mechanism to mechanically prevent the first carrier from moving at least from the carrier position at least in the first direction along the first path at least with the first velocity.

This allows for efficient transport of carriers, in particular improved transport with an improved transport quality with the advantages described above.

In some examples of the method according to the second aspect of the present disclosure, a transport system according to the first aspect of the present disclosure is used.

This allows efficient transport of carriers, in particular improved transport with an improved transport quality.

The examples presented with reference to the transport device according to the first aspect of this disclosure and its advantages apply correspondingly to the method for transporting carriers according to the second aspect of the present disclosure and vice versa.

Further features of possible examples are shown in the claims, the figures, and the description of the figures. All the features and combinations of features mentioned above in the description as well as the features and combinations of features mentioned below in the description of the figures and/or shown alone or in combination in the figures can be used not only in the combination as indicated or shown in each case, but also in other combinations or on their own so far it can technically be realized.

### BRIEF DESCRIPTION OF THE FIGURES

The aspects of the present disclosure defined above, and further aspects of the disclosure are apparent from the examples will now be explained in more detail by means of examples and with reference to the accompanying, but not limiting, drawings. The figures do not always show examples and their features and components to scale. The dimensions of the various features may be enlarged or reduced, in particular for clarity of description. For this purpose, the figures are at least partially schematized. The figures show:
- Fig. 1:: a schematic view of an exemplary transport system having a turntable as a second transport device,
- Fig. 2:: a schematic view of the transport system of Fig. 1, wherein a rotating means of the turntable is not shown,
- Fig. 3:: a schematic view of another exemplary transport system, comprising two linear transport devices and a turntable,
- Fig. 4:: a schematic top view of an enlarged section of a transport system with a first exemplary mechanically passive gate mechanism and with a second exemplary mechanically passive gate mechanism,
- Fig. 5:: a schematic top view of another exemplary mechanically passive gate mechanism in different operation states during operation of the corresponding transport system,
- Fig. 6:: a schematic top view of a further exemplary mechanically passive gate mechanism in a possible operation state during operation of the corresponding transport system,
- Fig. 7:: an enlarged view of parts of the mechanically passive gate mechanism of Fig. 6,
- Figs. 8a-8c:: a schematic top view of the mechanically passive gate mechanism of Figs. 6 and 7 in different operation states during operation of the corresponding transport system, wherein the mechanically passive gate mechanism is released,
- Figs. 9a-9c:: a schematic top view of the mechanically passive gate mechanism of Figs. 6 and 7 and 8a to 8c in different operation states during operation of the corresponding transport system, wherein the mechanically passive gate mechanism is in an interruption position,
- Fig. 10:: a schematic top view of the mechanically passive gate mechanism of Figs. 6 and 7, 8a to 8c and 9a to 9c, wherein the mechanically passive gate mechanism is in an interruption position and a movement of a first carrier along the first path is interrupted at the carrier waiting position,
- Figs. 11a-11d:: a schematic top view of the mechanically passive gate mechanism of Figs. 6 and 7, 8a to 8c, 9a to 9c and 10, wherein the mechanically passive gate mechanism is released, and
- Figs. 12a-12b:: a schematic top view of a further mechanically passive gate mechanism in different operation states during operation of the corresponding transport system.

In the following description, reference is made to the accompanying figures which form part of the disclosure, and which illustrate specific aspects in which the present disclosure can be understood. Identical reference signs refer to identical or at least functionally or structurally similar features.

In general, the disclosure of the described transport system also applies to the corresponding method for transporting carriers and vice versa, as long as technically possible. For example, if a specific feature of the system or of any of its parts is described on the basis of functional units, the corresponding method may include one or more steps to perform the described functionality, even if such steps are not explicitly described or represented in the figures. On the other hand, if, for example, a specific method step is described, the corresponding transport system may include a feature to perform the described method step, even if that feature is not explicitly described or represented in the figure. Similarly, a (sub-)device can be provided with corresponding system features or with features to perform a particular method step. The features of the various exemplary aspects described above or below may be combined unless expressly stated otherwise, and if technically possible.

### DETAILED DESCRIPTION

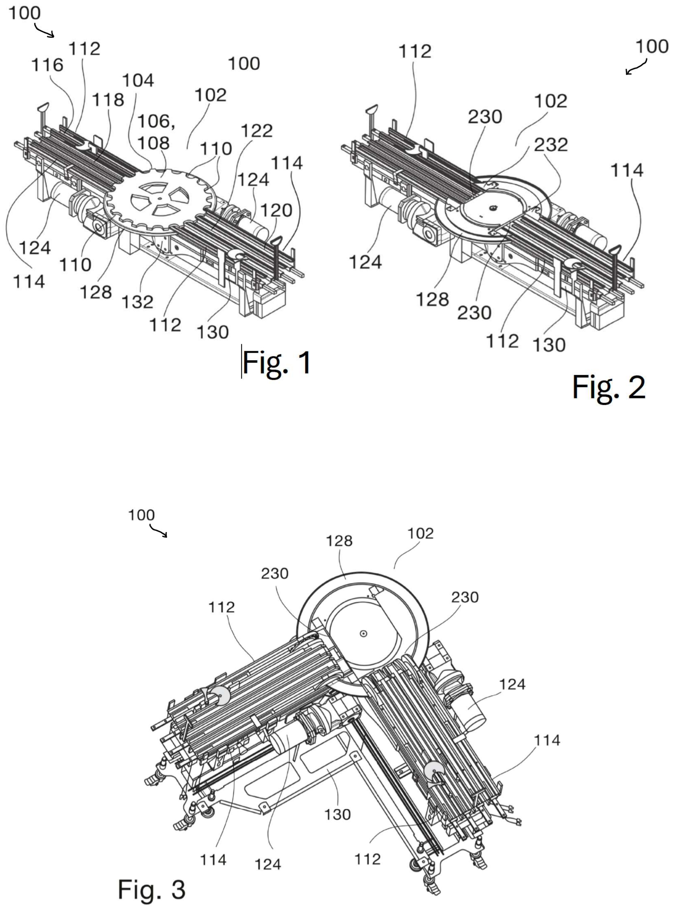

**Fig. 1** shows a schematic view of an exemplary transportation system 100 having a turntable 102. Turntable 102 comprises rotating means 104 which, for example, are a guiding and/or holding wheel 106. In some examples, the holding wheel 106 is or comprises a recess wheel 108 having a plurality of recesses 110 arranged along an outer circumference of the recess wheel 108. The transportation system 100 comprises at least one first transportation element 112 and at least one second transport element 114. The first transportation element 112 may comprise two or more first transportation lanes 116, 118, the second transportation element 114 may comprise two or more second transportation lanes 120, 122. The transportation lanes 116, 118, 120, 122 can also be referred to as transportation tracks. Transportation elements 112, 114 or the associated transportation lanes 116, 118, 120, 122, comprise conveying means (not shown), for example, a chain conveyor. The conveying means may be motorized, e.g., by conveyor motors 124. The transportation system 100 may comprise two or more first transportation elements 112 and/or two or more second transportation elements 114. In some examples the first transportation element 112 may comprise a plurality of conveying means and the second transportation element 114 may comprise a plurality of conveying means, those pluralities of conveying means being driven by means of one of the conveyor motors 124. In particular, the conveying means of first transportation lanes 116, 118 are driven in a first direction and the conveying means of second transportation lanes 120, 122 are driven in a second direction, which is the opposite to the first direction.

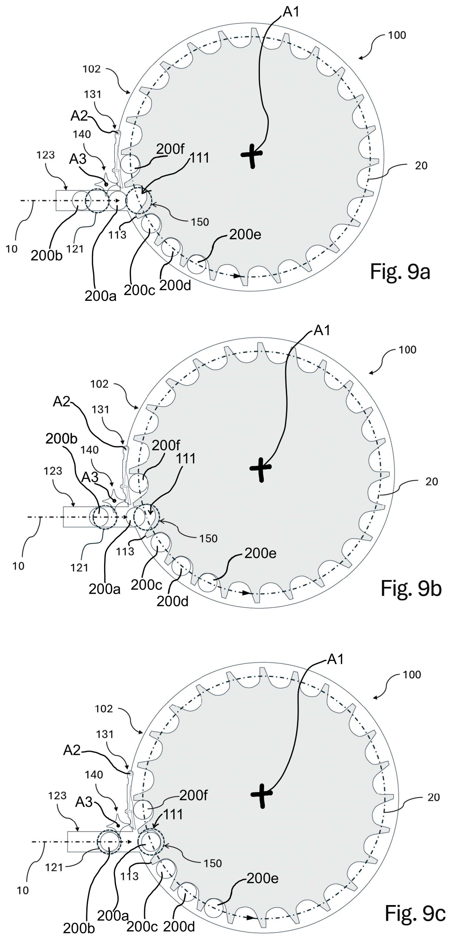

The transportation system 100 is configured to transfer a plurality of sample carriers, herein referred to as tube carriers 126, (see Fig. 9) by means of the turntable 102 from one of the first transportation elements 112 to one of the second transportation elements 114 and/or from one of the second transportation elements 114 to one of the first transportation elements 114. The turntable 102, particularly its rotating means 104, also can be motorized. For example, the rotating means 104 can be coupled to one of the conveyor motors 124. The rotating means 104 are rotatably attached to a base plate 128 of the turntable 102. In some examples, the transportation system 100 comprises a base plate. The turntable 102 rests on and is stabilized by a pair of base plate supports 132 mounted to the carrier rack 130.

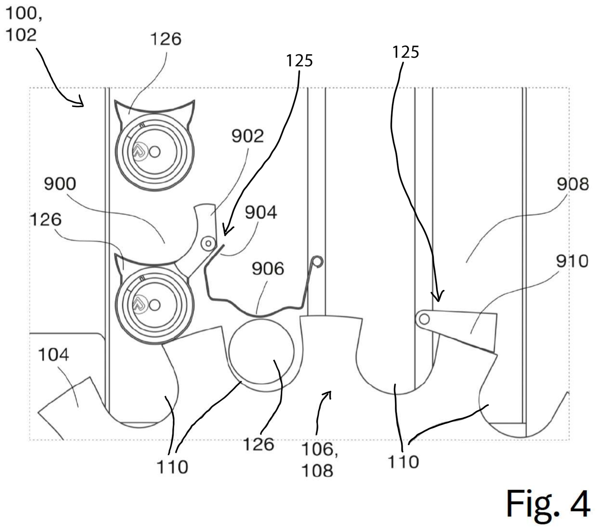

During operation of the transportation system 100, the first transportation element 112 can move tube carriers 126 (cf. Fig. 4) towards the turntable, each one of those carriers can enter a recess of the turntable 102, which in turn, can move those carriers to the second transportation element 114. The second transportation element 114 dispatches, e.g., takes over and moves away from the turntable 102, those carriers.

**Fig. 2** shows a schematic view of the transportation system 100, wherein the rotating means 104 of the turntable 102 is not shown so that more of the base plate 128 is visible. It can be seen in Fig. 2 that the base plate 128 comprises notches 230, and the transportation elements 112, 114 protrude into the base plate 128 by protruding in its notches 230. So, transportation elements 112, 114 or transportation lanes 116, 118, 120, 122, respectively, terminate on their proximal ends inside an outer circumference of the base plate 128. The turntable 102 may comprise transfer guiding plates 232 attached to base plate 128. Those plates 232 ease the transfer of tube carriers 126 from the first transportation element 112 to the turntable 102 and/or from the turntable 102 to the second transportation element 114.

The transportation elements 112, 114 of the exemplary transportation system 100 shown in Fig. 1 and Fig. 2 are connected in straight line by the turntable 102. In this configuration, the transportation system 100 and, in particular, the turntable 102 allows for changing the orientation of the tube carriers 126 with respect to the transportation direction.

**Fig. 3** shows a schematic view of an exemplary transportation system 100, wherein the first transportation element 112 and the second transportation element 114 are connected by the turntable 102 at an angle other than 180°, for example at 90°. In this configuration, turntable 102 allows for redirecting tube carriers 126 (cf. Fig. 4) conveyed by the transportation system 100.

**Fig. 4** shows a schematic top view of an enlarged section of a transport system 100 with a first exemplary mechanically passive gate mechanism 125. That gate mechanism 125 is configured to control the transfer of carriers 126 between a first linear transport device and a second transport device in the form of a turntable.

In particular, Fig. 4 shows an exemplary mechanism 900 of the transportation system 100 for entry-control to the recess wheel 108. The entry-control mechanism 900 comprises a rocker 902 and an actuating lever 904, wherein the actuating lever 904 is rotatably and arranged at a fixed position, and in functional connection with the rocker 902. A convex part 906 of the actuating lever 904 is configured to slide tangentially on the outer circumference of the recess wheel 108 and/or on an outer circumference of a tube carrier 126 disposed in a recess of the recess wheel 108. The convex part 906 is also configured to protrude in a recess 110 of the recess wheel 108 as it is passing by empty (i.e., without accommodating a tube carrier 126). As long as convex part 906 contacts/slides on the outer circumference of the recess wheel 108 or of a tube carrier 126, the actuating lever 904 is in a first lever position (cf. Fig. 4).

In the first lever position, the actuating lever 904 locks the rocker 902, thereby preventing the rocker 902 from moving out of a first rocker position, in which a tube carrier 126 can pass the rocker 902 and enter one of the recesses 110 of the turntable. When the convex part 906 protrudes in one of the recesses 110, the actuating lever 904 is in a second lever position (not shown). In the second lever position, the rocker 902 can rotatably move in a second rocker position, in which a tube carrier 126 cannot pass the rocker 902 and, therefore, is prevented from entering any of the recesses of the turntable 102. The rocker 902 can be spring loaded, e.g., biased towards its second rocker position.

Fig. 4 shows a further entry control mechanism 908. The gate mechanism 908 comprises a latch 910 being rotatably mounted to turntable 102 or to one of the transportation elements 112, 114. When the latch 910 is held in blocking position, cf. as Fig. 9, the latch 910 prevents a tube carrier 126 from entering any recesses of the turntable 102. When the latch 910 rotated into a recess 110, the latch 910 is in a pass-by position and a tube carrier 126 can pass the latch 910 and enter a recess of the turntable 102. The latch 910 can be spring loaded, e.g., biased towards its pass-by position.

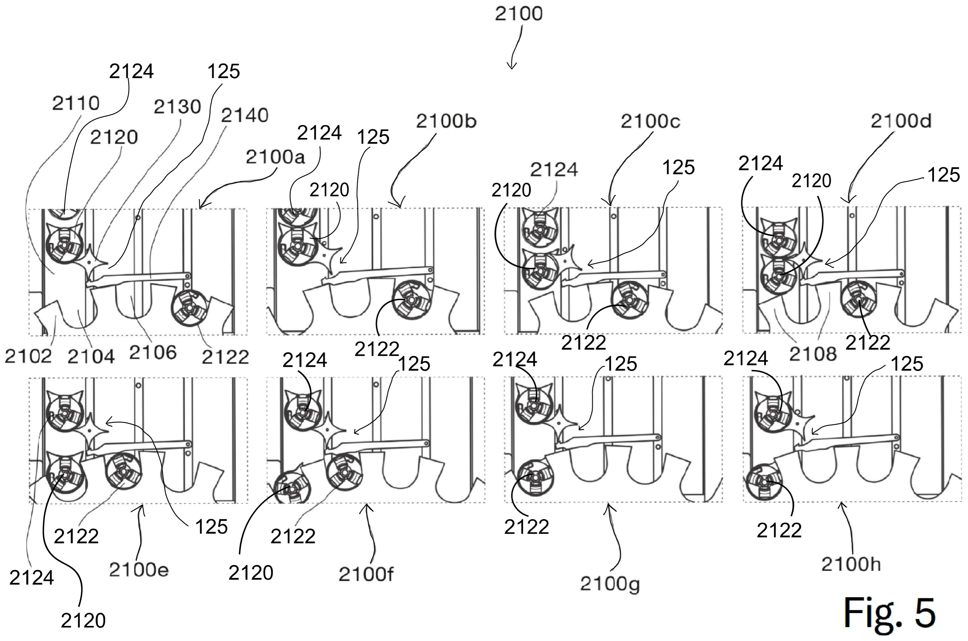

**Fig. 5** shows a schematic top view of another exemplary mechanically passive gate mechanism 125. That gate mechanism 125 is configured to control the transfer of carriers between a first linear transport device and a second transport device in the form of a turntable. In particular, Fig. 5 shows an entry-control mechanism 2100. The subfigures 2100a - 2100h show different states of the entry-control mechanism.

The gate mechanism 125 is comprised in a transportation system for transporting carriers 2120, 2122, 2124. The transportation system comprises a turntable 2102, which comprises a plurality of recesses 2104, 2106. Each recess 2104, 2106 is configured to receive a carrier. During operation of the transport system, the turntable 2102 transports carriers 2120, 2122, 2124from an incoming transportation element 2110 to an outgoing transportation element (not shown).

The transportation system comprises a gate mechanism 125 configured to control the movement of the carriers 2120, 2122, 2124and, in particular, the transfer of the carriers 2120, 2122, 2124 from the incoming transportation element 2110 to the turntable 2102. The gate mechanism 125 comprises a second movable element. i.e., carrier stopping wheel 2130. The carrier stopping wheel comprises a plurality of protrusions and is arranged with respect to the incoming transportation element 2110 such that, under certain conditions, it mechanically engages a carrier thereby preventing that carrier from entering the turntable 2102. The gate mechanism further comprises a first movable element, i.e., a control lever 2140 which mechanically controls the carrier wheel 2130 such that the carrier wheel 2130 either blocks a carrier from entering the turntable or allows a carrier to enter the turntable. The control lever 2140 is configured such that, under certain conditions, the control lever 2140 mechanically engages the turntable 2102 and/or a carrier which occupies a recess of the turntable 2102.

Subfigure 2100a, describes an initial configuration. An incoming carrier 2120 arrives at the carrier stopping wheel 2130. The recess 2106 of the turntable 2102 is not occupied. In subfigure 2100b, it is shown that at least a portion of the control lever 2140 moves into the recess 2106 thereby allowing the carrier stopping wheel 2130 to turn.

In subfigure 2100b, the carrier 2120 moves further towards the turntable 2102 and causes the rotation of the carrier stopping wheel 2130.

Subfigure 2100c shows the carrier 2120 moving further into the direction of the turntable 2102 and that movement serves to maintain the rotation of the carrier stopping wheel 2130.

As shown in subfigure 2100d, the rotation of the turntable 2102 causes the turntable 2102 to mechanically engage the control lever 2140, which moves towards and mechanically engages the carrier stopping wheel 2130. The carrier stopping wheel 2130 is hence blocked thereby preventing the carrier 2124 from moving towards the turntable 2102.

In Subfigure 2100e, the rotation of the turntable 2102 causes the control lever 2140 to mechanically engage the carrier 2122, which occupies a recess of the turntable 2102. The carrier stopping wheel 2130 is hence still engaged with the control lever 2140 and, hence, the carrier 2124 cannot move towards the turntable 2102. The carrier 2120, instead, moves towards the turntable 2102.

In subfigure 2100f the control lever is still mechanically engaged with the carrier 2122, thereby blocking the wheel 2130 and preventing the carrier 2124 from moving towards the turntable.

In subfigure 2100g, the control lever is mechanically engaged with a protruding element of the turntable hereby blocking the wheel 2130 and preventing the carrier 2124 from moving towards the turntable. Subfigure 2100h shows that at least a portion of the control lever 2140 moves into a recess 2106 of the turntable, thereby disengaging the wheel 2130 thereby allowing the carrier stopping wheel 2130 to turn, thereby allowing the carrier 2124 to move towards the turntable and, ultimately, to enter a recess of the turntable.

The gate mechanism 125 shown in figure 5 helps to let carrier contact the turntable at a desired position. This can be seen, e.g., in subfigure 2100d, which shows that the carrier 2120 contacts the turntable at an edge of a protruding element 2108 that belongs to the recess in which the carrier 2120 will finally be placed. Thereby, the carrier 2120 may enter smoothly into the recess of the turntable. Coincidental blocking situations, which can happen when the carriers contact the turntable in a random manner, are thus prevented.

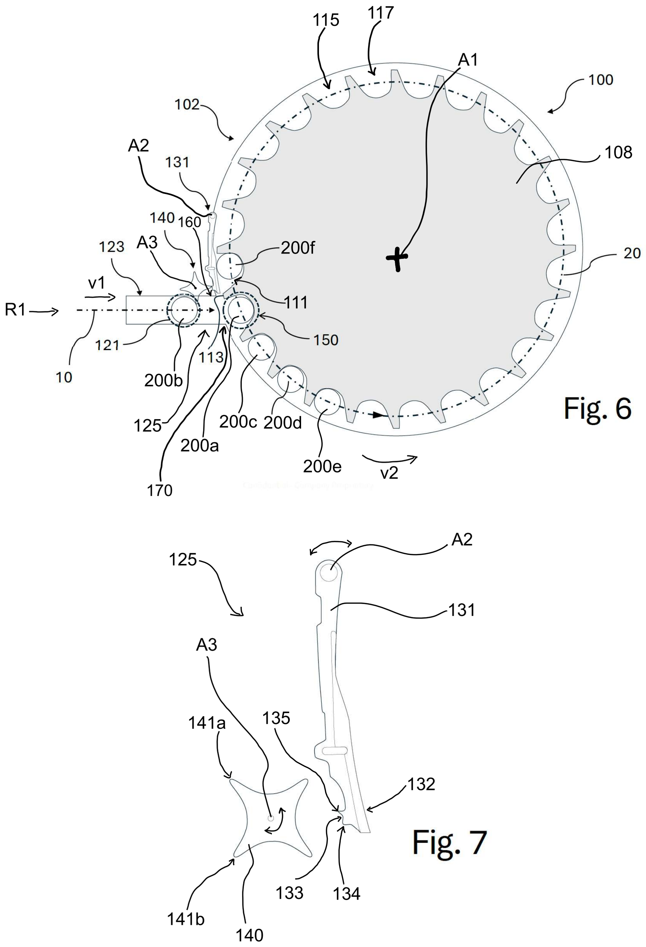

**Fig. 6** shows a schematic top view of an exemplary transport system 100 comprising a further exemplary mechanically passive gate mechanism 125. In particular, that mechanism 125 is configured to control the transfer of carriers between a first linear transport device 123 and a second transport device in the form of a turntable 102.

The exemplary transport system 100 is for transporting carriers 200a, 200b, 200c, 200d, 200e, 200f, in particular for automatically moving carriers 200a, 200b, 200c, 200d, 200e, 200f. In particular, each of the carriers 200a, 200b, 200c, 200d, 200e, 200f is configured to receive a tube containing a biological sample. In particular, during operation, the transport system 100 moves, e.g., transports, the carriers 200a, 200b, 200c, 200d, 200e, 200f automatically between various workstations.

The exemplary transport system 100 comprises the first, linear transport device 123 which is configured to transport carriers 200a, 200b along a first, linear path 10 at a given first velocity v1. In the schematic illustration in Fig. 6 only one lane of the linear transport device 123 is illustrated. In some examples, the linear transport device 123 comprises only one lane and, in some other examples, the linear transport device 123 comprises a plurality of lanes.

The transport system 100 shown on Fig. 6 further comprises the second transport device, i.e., the turntable 102, which comprises a rotatable component 108, in particular a recess wheel 108, with an outer wall 113 comprising a plurality of recesses 111, 115, 117. In Fig. 6, only some of the recesses 111, 115, 117 are indicated with reference signs. In particular, the plurality of recesses comprises the first recess 111.

Each of the recesses 111, 115, 117 of the recess wheel 108 is configured to receive a carrier 200a, 200b, 200c, 200d, 200e and 200f. The second transport device 102 is configured to move the recesses 111, 115, 117 along a second path 20 at a given second velocity v2. In this example, the second path 20 is a circumference and the given second velocity v2 is a given angular velocity.

In operation, the rotatable component 108 rotates around a first axis A1 with the given angular velocity v2, thereby moving the recesses 111, 115, 117 along the second path 20 at the given second velocity v2. In Fig. 6, the rotatable component 108 turns counterclockwise during operation of the transport system 100.

The recesses 111, 115, 117 are arranged in a substantially azimuthally symmetric manner with respect to the first axis A1.

The transport device 100 schematically shown in Fig. 6 further comprises a transferring region 150 for transferring the carriers 200a, 200b from the first transport device 123 to the second transport device 102. The layout of this transport device 100 is designed such that all carriers 200a, 200b fed by the first transport device 123 are going to be transferred over to the second transport device 102. For an optimized transfer, in particular for an advantageous timing of said transfer, the transport device 100 further comprises the mechanically passive gate mechanism 125. The gate mechanism 125, allows for controlling the entry of the carriers 200a, 200b into the transferring region 150, in particular the time of that entry. The mechanically passive gate mechanism 125 achieves this control pure mechanically, i.e., the mechanically passive gate mechanism 125 is not actively driven.

To facilitate the entry of the carriers 200a, 200b into the transferring region 150, this exemplary transport device 100 further comprises a guiding element 160. In Fig. 6, the guiding element is not shown: the reference sign 160 indicates only the position of the guiding element in Fig. 6. The guiding element 160 is configured to mechanically engage at least over a defined length along the first path 10 with a first engagement region (not shown) of carriers 200a, 200b. Thereby, the guiding element 160 precludes at least temporarily a modification of the orientation of that carriers 200a, 200b during further transport along the first path 10 in the first direction R1 towards the transferring region 150. In particular, the guiding element 160 precludes a modification of the orientation of a carrier 200a, 200b until the carrier that 200a, 200b entered the transferring region 150 and/or the recess 111. Thereby, the entry into the recess with a defined orientation is ensured.

This transport device 100 further comprises an orientating element 170. In Fig. 6, the orientating element 170 is not shown: reference sign 170 indicates only the position of that element in Fig. 6. The orientating element 170 is configured to change the orientation of a carrier and to orientate that carrier in a given second orientation after carrier has been disposed, in a first orientation, in a recess at the transferring region 150.

The exemplary mechanically passive gate mechanism 125 of Fig. 6 comprises a first movable element in the form of a lever 131. The lever 131 is pivotable around a second axis A2. The gate mechanism 125 further comprises a second movable element 140, which in this example is a separation wheel 140, the separation wheel 140 being rotatable around a third axis A3.

As shown in Fig. 6, during operation of the transport system 100, the transport system 100 is configured such that: if the recess 111 is already occupied by a further carrier 200f disposed within the recess 111 and whilst the turntable 102 is moving the recess 111 with the further carrier 200f disposed therein along a defined second portion (not shown) of the second path 20 over the defined second length at the given second velocity v2, the further carrier 200f disposed is mechanically engaging with the mechanically passive gate mechanism 125, thereby causing the mechanically passive gate mechanism 125 to mechanically prevent the carrier 200b from moving at least from the carrier position 121 in the first direction along the first path 10 at least with the first velocity v1. In particular, an outer surface of the carrier 200f is engaging with the lever 131, thereby causing the lever 131 to pivot clockwise about the second axis A2 and a lever tip to contact the separation wheel 140. This causes a blocking of the rotation of the separation wheel 140 and the movement of the carrier 200b along the first path 10 is interrupted.

The interruption of the movement of the carrier 200b is maintained while the turntable102 moves the recess 111 along the defined portion of the second path over the defined length at the given second velocity v2. The interruption of the movement of the first carrier, here carrier 200b, with the given first velocity v1 is terminated, when the mechanically passive gate mechanism 125 is released. The release enables the mechanically passive gate mechanism 125 to mechanically allow the first carrier 200b to continue moving from the carrier waiting position 121 in the first direction R1 along the first path 10 towards the transferring region 150.

In particular, the transport system 100 is configured such that, during its operation, the interruption of the movement of the carrier 200b with the given first velocity v1 along the first path 10 in the given first direction R1 is terminated when the occupied recess 111 has been moved along the second path, such that when the carrier 200b reaches the transferring region 150, the occupied recess 111 is already at least partly located outside the transferring region 150, thereby precluding the reception of the carrier 200b into the recess 111.

In particular, the transport system 100 is configured such that, during operation of the transport system 100, if the recess 111 is already occupied by a further carrier 200f disposed within the recess and if the mechanically passive gate mechanism 125 is mechanically disengaged from the turntable 102 and the further carrier 220f, the carrier 200b is moving from the carrier position 121 along the first path 10 at the given first velocity v1 in the given direction towards the transferring region 150 and the recess 111 is positioned along the second path 20 such that, the carrier 200b is in the transferring region when the recess 111 is at least partly located outside the transferring region 150, thereby precluding the reception of the carrier 200b into the recess 111.

The timing of the release of the gate mechanism 125 when the recess 111 is occupied is adapted with the given second velocity v2 of the recess wheel 108, with the given first velocity v1 of the carriers along the first path 10 and the distance between the carrier waiting position 121 and the transferring region 150. This is achieved by an adapted kinematic and the arrangement and kinematic coupling of the mechanically passive gate mechanism 125 within the transport device 100. The timing, for which a movement of a carrier along the first path 10 has to be interrupted, and the timing of release required for arrival of a carrier moving along the first path 10 on time in the transferring region 150, can be derived by a person skilled in the art without any problems. The same applies to the required kinematic of the mechanically passive gate mechanism 125 for controlling the timing.

The release of the gate mechanism 125 allows for interrupting and/or blocking the carrier 200b at the carrier waiting position 121 until an unoccupied recess is available. This way, collisions in the transferring region 150 among carriers and between carriers and the turntable 102 can be avoided. In particular, those collisions are collisions between some of the carriers 200a, 200b moved by the first transport device 123 and a portion 113 of an outer wall of the recess wheel 108 and collisions between some of the carriers 200a, 200b and some of the carriers 200c, 200d, 200e, 200f disposed in a recess of the recess wheel 108.

During operation, the transport system 100 is further configured such that, if no carrier 200c, 200d, 200e, 200f is already disposed in the recess 111 (i.e., if, contrary to what Fig. 6 shows, the recess 111 is unoccupied) and whilst the turntable 102 is moving the recess 111 along the defined first portion (not shown) of the second path 20 over the defined first length at the given second velocity v2, the turntable 102 is mechanically engaging with the mechanically passive gate mechanism 125. This engagement mechanically prevents a carrier located at the carrier waiting position 121 from moving from the carrier position 121 in the first direction R1 along the first path 10 with the first velocity v1.

In particular a portion 113 of the outer wall of the recess wheel 108 of the turntable 102 mechanically engages with the lever 131, thereby causing the lever 131 to pivot clockwise about the second axis A2 and a lever 131 tip to contact the separation wheel 140. This causes a blocking of the rotation of the separation wheel 140 and the movement of the carrier 200b along the first path 10 is interrupted. This forces the carriers on the first transport device 123 to wait at the carrier waiting position 121 as long as their movement along the first path 10 is interrupted, in particular blocked.

In particular, the transport system 100 is configured such that, during its operation, the interruption of the movement of the carrier 200b with the given first velocity v1 along the first path 10 in the given first direction is terminated, if the recess 111 is unoccupied and no further carrier 200c, 200d, 200e, 200f are located in the recess 111 (i.e., if, contrary to what Fig. 6 shows, the recess 111 is unoccupied), when the recess 111 reaches a first recess position (not shown) along the second path 20 after the second transport device 102 has moved the recess 111 along the defined first portion of the second path 20 over the defined first length at the given second velocity v2.

In particular, the transport system 100 is configured such that, during operation of the transport system 100, if the recess 111 is unoccupied and no further carrier 200c, 200d, 200e, 200f are located in the recess 111 (i.e., if, contrary to what Fig. 6 shows, the recess 111 is unoccupied) and if the mechanically passive gate mechanism 125 is mechanically disengaged from the turntable 102, the carrier 200b is moving from the carrier position 121 along the first path 10 at the given first velocity v1 in the given direction towards the transferring region 150 so that the carrier 200b enters the recess 111 at the transferring region 150.

In this exemplary transport device 100, the first transport device 123 comprises a conveyor belt (not shown) with a defined slip such that blocking or interrupting of carriers 200a, 200b in the carrier waiting position 121 causes slip between the carrier and the conveyor belt, thereby prevent further movement of the carriers 200a, 200b without interruption or deceleration of the movement of the conveyor belt.

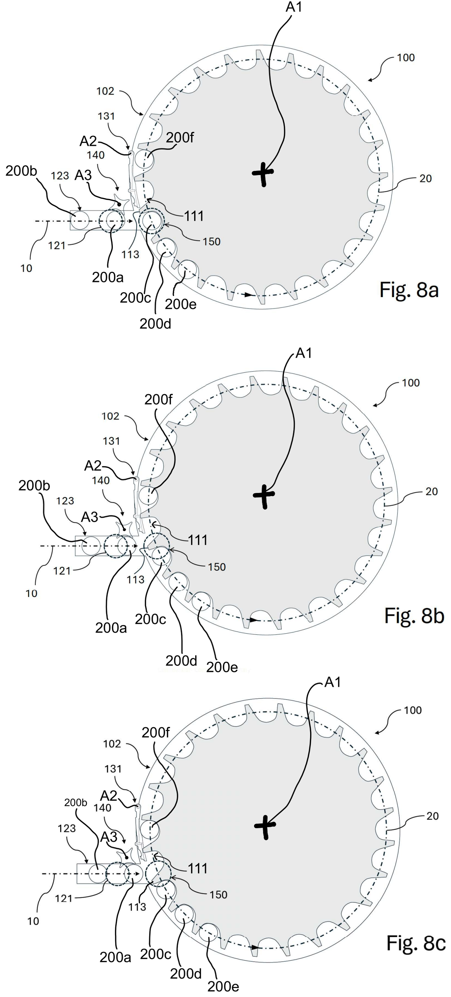

The behavior, in particular the kinematic behavior of the transport system 100, in particular of the gate mechanism 125, is further described in the following, in particular with reference to Figs. 8a to 8c, 9a to 9c, 10 and 11a to 11d.

**Fig.** 7 shows an enlarged view of some parts of the mechanically passive gate mechanism 125 of Fig. 6, namely of the lever 131 and the separation wheel 140. As already mentioned, the separation wheel 140 is rotatable around the third axis A3. It comprises a plurality of protrusions 141a, 141b which are extending radially with respect to the third axis A3. In this example, the plurality of protrusions 141a, 141b is arranged in an azimuthally symmetric manner with respect to the third axis A3, wherein the plurality of protrusions 141a, 141b comprises number of N = 4 protrusions 141a, 141b.

With a geometry of the separation wheel 140 as shown, in particular with these slim protrusion and the curved contour in between, the carriers 200a, 200b along the first path 10 can be separated when queued.

The rotation axes A1, A2 and A3 are extending substantially parallel to one another and are substantially orthogonal to the plane, in which the recess wheel 108 is extending, and/or to plane that contains the first path 10 and/or to the plane that contains the second path 20.

The lever 131 of the gate mechanism 125 is pivotable, at least over a defined range, about the second axis A2. The lever comprises a first engagement surface 132 for engaging mechanically with an outer wall of the recess wheel 108, in particular with portion(s) 113 of the outer wall between the recesses 111, 115, 117. The lever 131 and the recess wheel 108 are spatially positioned with respect to one another so that the first engagement surface 132 faces towards the recess wheel 108.

The separation wheel 140 comprises a second engagement surface 133 for engaging mechanically with the separation wheel 140, in particular its protrusions 141a, 141b. The lever 131 comprises a catch element 134 or catch structure 134 at the outer region or end of the engagement surface 133 and a retention element 135 or retention structure 135 at the inner region or end of the engagement surface 133. The lever 131 and the separation wheel 140 are arranged with respect to one another so that, when the gate mechanism 125 is in the interruption position, the catch element 134 and the engagement surface 133 block the rotational movement of the separation wheel 140 to interrupt the movement of a carrier located at the carrier position along the first path.

When the gate mechanism 125 is in the interruption position, the lever 131 and the separation wheel 140 are mechanically engaged with one another and the catch element 134 prevents a clockwise rotation of the separation wheel 140, thereby reducing or eliminating a risk of pushing a carrier backwards against the first direction R1.

When the gate mechanism 125 is in the interruption position, the lever 131 and the separation wheel 140 are mechanically engaged with one another and the retention element 135 prevents a counterclockwise rotation of the separation wheel 140 thereby preventing the movement of a carrier in the waiting carrier position in the first direction towards the transferring region 150.

In Fig. 7, the gate mechanism is shown in a released position, in which the separation wheel 140, in particular its protrusions 141a, 141b are disengaged from the lever 131, in particular not in contact with second surface 133., i.e. not in contact with the lever 131. Thus, the separation wheel 140 is free to move about axis A3. Lever 131 can also pivot about axis A2, at least within a defined range.

In the following, the interruption of a movement of a carrier at the carrier waiting position and the termination of that interruption via the mechanically gate mechanism 125 during operation of transport system 100 will be described with reference to Figs. 8a to 8c, 9a to 9c, 10 and 11a to 11d.

**Figs. 8a to** 8c show a schematic top view of the mechanically passive gate mechanism 125 of Figs. 6 and 7 in different operation states during operation of the transport system 100.

Fig. 8a shows the transport system 100 in a state, in which the further carriers 200c, 200d, 200e and 200f each are received by a recess of the recess wheel 108, wherein carrier 200c is located in the transferring region 150 and occupying a corresponding recess. To avoid a collision, carrier 200a must not enter the transferring region 150 since it is occupied by carrier 200c. However, recess 111 approaching the transferring region 150 is empty and carrier 200a can be received by this recess 111 when this recess 111 arrives in the transferring region 150.

In Fig. 8a the mechanically passive gate mechanism 125 is in a released position, in which the portion 113 of the outer wall is disengaged from the first engagement surface 132 of the lever 131 (cf. Fig. 7). Lever 131 and separation wheel 140 are also disengaged from each other, thereby allowing the wheel 140 to rotate.

In this released position, the movement of the carrier 200a is not interrupted or blocked and that carrier 200a can move towards the transferring region 150 along the first path 10, what is schematically illustrated in Figs. 8a to 8c.

The linear movement of the carrier 200a along the first path 10 in the given direction with the given first velocity v1 causes a counterclockwise rotation of released separation wheel 140 in response to the carrier 200a engaging with the separation wheel 140, whilst the recess wheel 108 is rotating further (see Figs. 8b and 8c). Therein, the separation wheel rotates by 360/N=4 degrees around the third axis A3 whilst the carrier 200a moves from the waiting carrier position 121, passes the gate mechanism 125 and is in mechanical engagement with the separation wheel 140.

While the recess 111 is moved into the transferring region 150 for receiving the approaching carrier 200a, the carrier 200f held in another recess of the recess wheel 108 starts engaging with the lever 131(see Fig. 8b) and continues being engaged with the lever 131, when the recess wheel 108 is rotated further (see Fig. 8c).

After some time, empty recess 111 reaches the transferring region and is ready to receive the carrier 200a, as shown in Figs. 9a to 9c. Due to the movement of the recess wheel 108, the carrier 200f disposed in the recess following the recess 111 along the second path 20 is mechanically engaged with the lever 131 while the carrier 200f is moved along the second path 20. The carrier 200f, which has a suitable diameter for being transported via the transport system 100, causes the lever 131 to pivot clockwise around the axis A2 and to be brought into engagement with one of the protrusions of separation wheel 140. As a result, a rotation of the separation wheel 140 is blocked.

**Figs. 9a to 9c** show a schematic top view of the mechanically passive gate mechanism 125 in an interruption position, in which the separation wheel 140 is blocked by lever 131.

The rotation of the recess wheel 108 around the first axis A1 causes the recess occupied by the carrier 200c to move out of the transferring region 150 and the unoccupied recess 111 to approach the transferring region 150 (see Fig. 9b) and to move into this region 150 (see Fig. 9c), whilst the lever 131 is still in contact and engaged with the separation wheel 140 by the engagement between the carrier 200f and the lever 131.

As schematically shown in Fig. 9b, the firs transport element moves the carrier 200b along the first path 10 and, as shown in Fig. 9c, the carrier 200b reaches the carrier position 121, in which carrier 200b is blocked by the blocked separation wheel 140 in the interruption position. The movement of carrier 200b along the first path 10 is interrupted to avoid a collision with carrier 200f, which is occupying the recess following the recess 111 along the second path 20.

The transport system 100 is configured to block carrier 200b and to interrupt its movement at the carrier waiting position 121 until it is time to terminate the interruption to ensure arrival of carrier 200b at the transferring region 150 for entry into an unoccupied recess., i.e., the recesses following the recess with the carrier 200f along the second path.

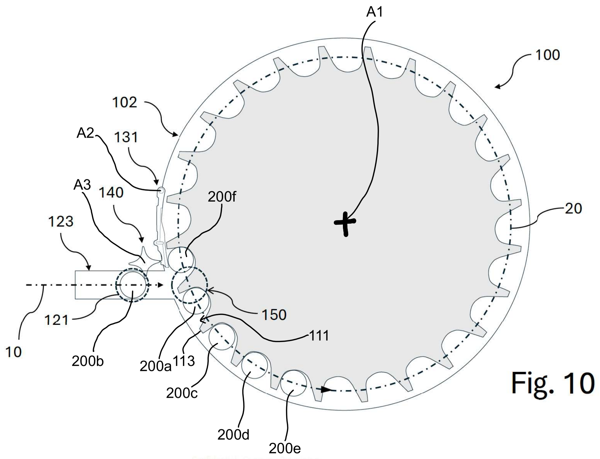

**Fig. 10** shows the mechanically passive gate mechanism 125 in the interruption position, in which the separation wheel 140 prevents the carrier 200b from moving from the waiting carrier position 121 along the first path 10. In the interruption position, the separation wheel 140, in particular one of its protrusions, is mechanically engaged with the carrier 200b, thereby mechanically preventing said carrier 200b to move along the first path 10 from the carrier position121 towards the transferring region 150.

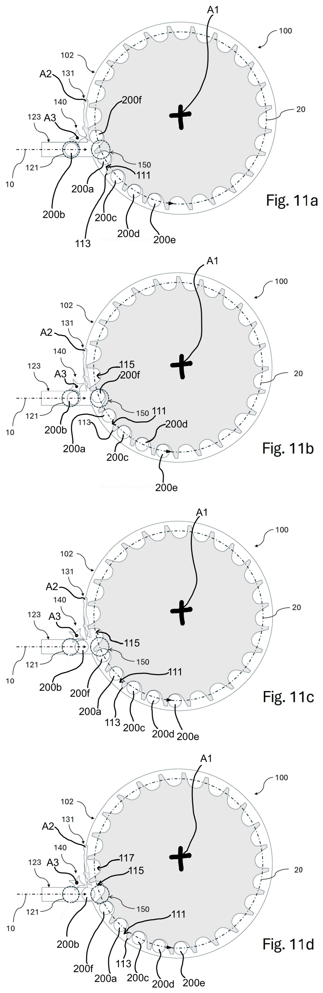

When the lever 131 is not engaged with the turntable 102 and when the lever 131 is not engaged with any of the carriers moved by the turntable 102, the mechanically gate mechanism 125 is released (again) and the interruption of the movement of carrier 200b is terminated. This is schematically illustrated in Figs. 11a to 11d.

**Figs. 11a to 11d** show the mechanically passive gate mechanism 125 releasing again. Fig. 11a shows the gate mechanism 125 shortly before release. First, carrier 200f is disengaged from lever 131 during further rotation of the recess wheel 108. During a further rotation of the recess wheel 108, there is no engagement between the recess wheel 108 and the lever 131 and the gate mechanism 125 is released again (see Fig. 11b). The separation wheel 140 is free to rotate again about the third axis A3, the interruption of the movement of the carrier 200b is terminated and the carrier 200b starts moving again (see Fig. 11b). The movement of the carrier 200b disengages the separation wheel 140 from the lever 131 (see Fig. 11b and 11c).

The carrier 200b moves towards the unoccupied recess 115 (see Figs. 11c and 11d) analogous to the carrier 200a in Figs. 8b and 8c.

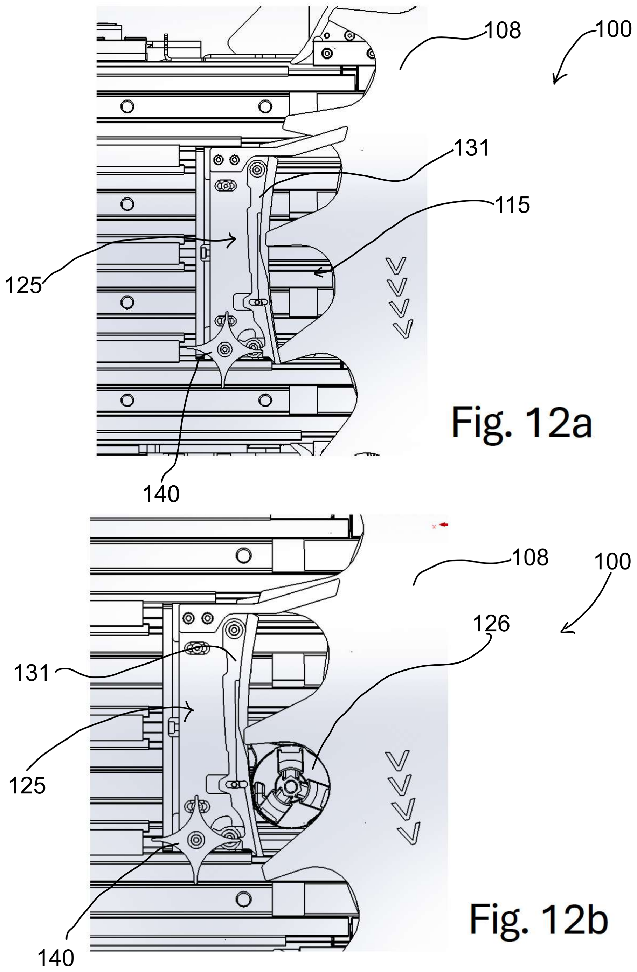

**Figs. 12a and 12b** show a schematic top view of a further mechanically passive gate mechanism 125. In particular, that mechanism 125 is configured to control the transfer of carriers between a first linear transport device and a second transport device in the form of a turntable, the turntable comprising a recess wheel 108. During operation of the transport system 100, the recess wheel 108 is rotating counterclockwise.

Fig. 12a shows the transport system 100, in particular the gate mechanism 125 in a state, in which a portion of an outer wall of the recess wheel 108 is mechanically engaging with the first engagement surface 132 (cf. Fig. 7) of the lever 131. The engagement between the recess wheel 108 and the first engagement surface 132 cause the lever 131 to pivot clockwise, and the second engagement surface 133 is pressed against a protrusion of the separation wheel 140. As a result, a rotation of the separation wheel 140 is blocked, wherein a further protrusion of the wheel 140 is protruding in a carrier pathway. In this state, a movement of a carrier positioned at the carrier waiting position 121 along the first path 10 towards the recess 115 is blocked. The gate mechanism 125 will be released when the recess wheel turns further and the outer wall of the recess wheel 108 is disengaged from the first engagement surface 132 of the lever 131.

Fig. 12b shows the transport system 100, in particular the gate mechanism 125 in a state, in which a portion of an outer wall of carrier 126 disposed in a recess of the recess wheel 108 is engaging with the first engagement surface 132 (cf. Fig. 7) of the lever 131. The engagement between the recess wheel 108 and the first engagement surface 132 causes the lever 131 to pivot clockwise and the second engagement surface 133 is pressed against a protrusion of the separation wheel 140. As a result, a rotation of the separation wheel 140 is blocked, and a further protrusion of the wheel 140 is protruding in the carrier pathway. In this state, a movement of a carrier positioned at the waiting carrier position along the first path towards the recess 115 is blocked. The gate mechanism 125 will be released, at least temporarily, when the recess wheel turns further and the first engagement surface 132 of the lever 131 is disengaged from the outer wall of the carrier 126 and from the outer surface of the outer wall of the recess wheel 108. The blocking of the movement of the separation wheel 140 is maintained until an empty recess is approaching the transferring region and ready to receive another carrier (not shown).

Further examples are possible. In addition, other examples of transport systems for transporting carriers are possible, which are not claimed herein, but may be claimed by one or more further applications, and which may be configured differently.

Some of these other examples of a transport system for transporting carriers may, in particular, only optionally be configured such that: if no further carrier is already disposed in the recess, and whilst the second transport device is moving the recess along a defined first portion of the second path over a defined first length at the given second velocity, e.g., for interrupting the movement of the first carrier, the second transport device, in particular a portion of an outer wall of the second transport device, is mechanically engaging with the mechanically passive gate mechanism, thereby causing the mechanically passive gate mechanism to mechanically prevent the first carrier from moving at least from a carrier position at least in a first direction along the first path at least with the first velocity; and/or such that if the recess is already occupied by a further carrier disposed within the recess, and whilst the second transport device is moving the recess with the further carrier disposed therein along a defined second portion of the second path over a defined second length at the given second velocity, e.g., for interrupting the movement of the first carrier, the further carrier disposed in the recess is mechanically engaging with the mechanically passive gate mechanism, thereby causing the mechanically passive gate mechanism to mechanically prevent the first carrier from moving at least from the carrier position at least in the first direction along the first path at least with the first velocity.

That means, in other words, that at least one of the following if-conditions a) and b) for interrupting the movement of the first carrier, in particular both if-conditions, can be optional in one or more other examples of a transport system according to the first aspect of this disclosure:
a) if no carrier is already disposed in the recess and whilst the second transport device is moving the recess along a defined first portion of the second path over a defined first length at the given second velocity, the second transport device is mechanically engaging with the mechanically passive gate mechanism, thereby causing the mechanically passive gate mechanism to mechanically prevent a first carrier from moving at least from a carrier position at least in a first direction along the first path at least with the first velocity;
b) if the recess is already occupied by a further carrier disposed within the recess and whilst the second transport device is moving the recess with the further carrier disposed therein along a defined second portion of the second path over a defined second length at the given second velocity, the further carrier disposed in the recess is mechanically engaging with the mechanically passive gate mechanism, thereby causing the mechanically passive gate mechanism to mechanically prevent the first carrier from moving at least from the carrier position at least in the first direction along the first path at least with the first velocity.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### List of reference signs

- 100: transport system
- 10: first path
- 20: second path
- 102: second transport device, in particular turntable
- 104: rotating means
- 106: guiding wheel
- 108: recess wheel
- 110, 111, 115, 117: recesses
- 112: first transportation element
- 113: outer wall of the recess wheel
- 114: second transportation element
- 116: first transportation lane
- 118: first transportation lane
- 120: second transportation lane
- 121: carrier (waiting) position
- 122: second transportation lane
- 123: first transport device
- 124: conveyor motor
- 125: mechanically passive gate element
- 126: tube carrier
- 128: base plate
- 131: first movable element of the mechanically passive gate mechanism, in particular lever
- 132: first engagement surface
- 133: second engagement surface
- 134: catch element/structure
- 135: retention element/structure
- 140: second movable element of the mechanically passive gate mechanism, in particular separation wheel
- 141a: first protrusion
- 141b: second protrusion
- 150: transferring region
- 160: guiding element
- 170: orientating element
- 200a: first carrier
- 200b: subsequent carrier
- 200c, 200d, 200e, 200f: further carrier
- 230: notch
- 232: transfer guiding plates
- 900: entry control mechanism
- 902: rocker
- 904: actuating lever
- 906: convex part
- 908: entry control mechanism
- 910: latch
- 2100: block and entry system and procedure
- 2100a: block by turntable
- 2100b: allow carrier to enter
- 2100c: carrier moves towards turntable
- 2100d: carrier waits for next recess
- 2100e: carrier enters turntable
- 2100f: next carrier blocked from entering
- 2100g: block by turntable
- 2100h: allow carrier to enter
- 2102: turntable
- 2104: recess
- 2106: recess
- 2108: protruding part
- 2110: transportation element
- 2120: carrier
- 2122: carrier
- 2124: carrier
- 2128: carrier
- 2130: carrier stopping wheel
- 2140: control lever

- A1: first axis
- A2: second axis
- A3: third axis
- R1: first direction
- v1: first velocity
- v2: second velocity

## Claims

1. A transport system (100) for transporting carriers (200a, 200b, 200c, 200d, 200e, 200f), in particular for automated movement of carriers (200a, 200b, 200c, 200d, 200e, 200f) configured for receiving a tube containing a biological sample between various workstations, the system (100) comprising:
a first transport device (123), being configured to transport carriers (200a, 200b) along a first path (10) at a given first velocity (v1), or being configured to direct carriers (200a, 200b) along a first path (10) which are being self-propelled and configured to move at a given first velocity;
a second transport device (102) comprising at least one recess (111, 115, 117), wherein the at least one recess (111) is configured to receive a carrier (200a, 200b, 200c, 200d, 200e, 200f), and wherein the second transport device (102) is configured to move the at least one recess (111) along a second path (20) at a given second velocity (v2);
a transferring region (150) for transferring at least one carrier (200a, 200b) from the first transport device (123) to the second transport device (102); and
a mechanically passive gate mechanism (125),
wherein the transport system (100) is configured such that, during operation of the transport system (100):
if no carrier (200c, 200d, 200e, 200f) is already disposed in the recess (111) and whilst the second transport device (102) is moving the recess (111) along a defined first portion of the second path (20) over a defined first length at the given second velocity (v1), the second transport device (102) is mechanically engaging with the mechanically passive gate mechanism (125), thereby causing the mechanically passive gate mechanism (125) to mechanically prevent a first carrier (200a) from moving at least from a carrier position (121) at least in a first direction (R1) along the first path (10) at least with the first velocity (v1);
if the recess (111) is already occupied by a further carrier (200c, 200d, 200e, 200f) disposed within the recess (111) and whilst the second transport device (102) is moving the recess (111) with the further carrier (200c, 200d, 200e, 200f) disposed therein along a defined second portion of the second path (20) over a defined second length at the given second velocity (v2), the further carrier (200c, 200d, 200e, 200f) disposed in the recess (111) is mechanically engaging with the mechanically passive gate mechanism (125), thereby causing the mechanically passive gate mechanism to mechanically prevent the first carrier (200a) from moving at least from the carrier position (121) at least in the first direction (R1) along the first path (10) at least with the first velocity (v1).

2. The transport system (100) according to claim 1, wherein the transport system is configured such that, during its operation, an interruption at least in the first direction (R1) of the movement of the first carrier (200a) with the given first velocity (v1) along the first path (10) is terminated, at least:
if the recess (111) is unoccupied and no further carrier (200c, 200d, 200e, 200f) is located in the recess (111), when the recess (111) reaches a first recess position, along the second path (20) after the second transport device (102) has moved the recess (111) along the defined first portion of the second path (20) over the defined first length at the given second velocity (v2);
if the recess (111) is occupied by the further carrier (200c, 200d, 200e, 200f) disposed within the recess (111) and the occupied recess (111) has been moved along the second path (20), such that when the first carrier (200a, 200b) reaches the transferring region (150), the occupied recess (111) is already at least partly located outside the transferring region (150), thereby precluding the reception of the first carrier (200a) into the recess (111).

3. The transport system (100) according to any one of the preceding claims,
wherein the first path (10) is a linear path and/or the second path (20) is at least a portion of a circumference and the given second velocity (v2) is a given angular velocity;
wherein the second transport element (102) comprises a rotatable component (1108), the rotatable component (108) comprising a wall (113), the wall comprising a plurality of recesses (111, 115, 117), wherein the plurality of recesses comprises the first recess (111);
wherein, in operation, the rotatable component (108) rotates around a first axis (A1) with the given angular velocity, and wherein the recesses (111, 115, 117) of the plurality of recesses (111, 115, 117) are arranged in a substantially azimuthally symmetric manner with respect to the first axis (A1).

4. The transport system (100) according to any one of the preceding claims, wherein the transport system (100) is configured to interrupt movement of the first carrier (200a) along the first path (10) and/or to terminate interruption of the movement of the first carrier (200a) such that, during operation of the transport system (100):
if the recess (111) is unoccupied and no further carrier (200c, 200d, 200e, 200f) is located in the recess (111), the first carrier (200a) reaches the transferring region (150) when the unoccupied recess (111) is in the transferring region (150) and/or is passing through the transferring region (150) along the second path, thereby allowing the first carrier (200a) to enter the unoccupied recess (111);
if the recess (111) is occupied by a further carrier (200c, 200d, 200e, 200f) disposed within the recess (111), the first carrier (200a) only reaches the transferring region (150) when the recess (111) with the further carrier (200b) disposed therein is located outside the transferring region (150) along the second path (20), thereby preventing the further carrier (200c, 200d, 200e, 200f) from being received by the occupied recess (111).

5. The transport system (100) according to claim 2,
wherein the transport system (100) is configured such that, during its operation, the mechanically passive gate mechanism (125) is released such that, in particular in dependence on the given first velocity (v1) and the given second velocity (v2), if the recess (111) is unoccupied and no further carrier (200c, 200d, 200e, 200f) is located in the recess (111), the first carrier (200a), moving along the first path (10) in the given direction (R1) with the given first velocity (v1) from the carrier position (121) to the transferring region (150) for transfer from the first transport device (123) to the second transport device (102) reaches the transferring region (150) when the unoccupied recess (111) is also in the transferring region (150) and/or passing through the transferring region along the second path (20), thereby allowing the first carrier (200c, 200d, 200e, 200f) to enter the unoccupied recess (111) when the recess is in a receiving position along the second path (20).

6. The transport system (100) according to any one of the preceding claims, wherein the mechanically passive gate mechanism (125) comprises:
a first movable element (131), comprising or being a lever (131), wherein the lever (131) is at least partially pivotable around a second axis (A2); and
a second movable element (140), comprising or being a separation wheel (140), wherein the separation wheel (140) is rotatable around a third axis (A3);
wherein the transport system (100) is configured such that the first movable element (131) is mechanically engageable at least temporarily during operation of the transport system (100) with the second transport device (102) and/or with a carrier (200b) disposed in the recess (111) and occupying the recess (111), in particular whilst the second transport device (102) is moving the recess (111) along a defined portion of the second path over a defined length at the given second velocity; and
wherein the first movable element (131) and the second movable element (140) are configured to mechanically engage with each other, at least temporarily during operation of the transport system (100), such that the first movable element (131) prevents at least temporarily a movement of the second movable element (140), thereby enabling the second movable element (140) to mechanically prevent at least temporarily a carrier (200a) to move along the first path (10) at least in the first direction (R1), in particular at least from the carrier position (121).

7. The transport system (100) according to any of the preceding claims, in particular according to claim 6,
wherein the first transport device (123), the second transport device (102), and the mechanically passive gate mechanism (125), in particular the first movable element (131) and the second movable element (140) of the mechanically passive gate mechanism (125), are spatially positioned with respect to one another such that, at least in one state of the transport system (100), when the first carrier (200a) is at the carrier position (121) along the first path (10), the mechanically passive gate mechanism (125), in particular the second movable element (140) of the mechanically passive gate mechanism (125), is able to mechanically engage, at least temporarily, with the first carrier (220a) to mechanically prevent said first carrier (200a) to move from the carrier position (121) along the first path (10) in the first direction (R1) with the given first velocity (v1).

8. The transport system (100) according to claim 6 or 7,
wherein the first transport device (123), the second transport device (102), and the mechanically passive gate mechanism (125), in particular the first movable element (131) and the second movable element (140) of the mechanically passive gate mechanism (125), are spatially positioned with respect to one another and the given first velocity (v1) and the given second velocity (v2) are such that during operation of the transport system (100):
if no further carrier (200b) is already disposed in the recess (111) and whilst the second transport device (102) is moving the recess (111) along the defined first portion of the second path (20) over the defined first length at the given second velocity (v2),is mechanically engaging with the first movable element (131) of the mechanically passive gate mechanism (125), thereby causing the second movable element (140) of the mechanically passive gate mechanism (125) to mechanically prevent the first carrier (200a) from moving at least from the carrier position (121) at least in the first direction (R1) along the first path (10) at least with the first velocity (v1);
if the recess (111) is already occupied by a further carrier (200c, 200d, 200e, 200f) disposed within the recess (111) and whilst the second transport device (102) is moving the recess (111) with the further carrier (200c, 200d, 200e, 200f) disposed therein along the defined second portion of the second path (20) over the defined second length at the given second velocity (v2), the further carrier (200c, 200d, 200e, 200f) disposed in the recess (111) is mechanically engaging with the first movable element (131) of the mechanically passive gate mechanism (125), thereby causing the second movable element (140) of the mechanically passive gate mechanism (125) to mechanically prevent the first carrier (200a) from moving at least from the carrier position (121) at least in the first direction (R1) along the first path (10) at least with the first velocity (v1).

9. The transport system (100) according to any one of the preceding claims,
wherein the first transport device (123), the second transport device (102), and the mechanically passive gate mechanism (125), in particular the first movable element (131) and the second movable element (140) of the mechanically passive gate mechanism (125), are spatially positioned with respect to one another and the given first velocity (v1) and the given second velocity (v2) are such that, during operation of the transport system (100):
the mechanically passive gate mechanism (125), in particular the first movable element (131) of the mechanically passive gate mechanism (125), is disengaged from the second transport device (102) and/or from a carrier (200c, 200d, 200e, 200f) disposed in the recess (111), thereby releasing the mechanically passive gate mechanism (125) and allowing the first carrier (200a) to move along the first path (10) towards the second transport device (102), at least:
if the recess (111) is unoccupied and no further carrier (200c, 200d, 200e, 200f) is located in the recess (111), when the recess (111) reaches the first recess position, along the second path (20) after the second transport device (102) has moved the recess (111) along the defined first portion of the second path (20) over the defined first length at the given second velocity (v2);
if the recess (111) is occupied by the further carrier (200c, 200d, 200e, 200f) disposed within the recess (111) and the occupied recess (111) has been moved along the second path (20) such that when the first carrier (200a) reaches the transferring region (150), the occupied recess (111) is already, at least partly, located outside the transferring region (150), thereby precluding the reception of the first carrier (200a) into the recess (111).

10. The transport system (100) according to any one of the preceding claims 6 to 9, wherein the second movable element (140) is rotatable around the third axis (A3) and comprises a plurality of protrusions (141) extending radially with respect to the third axis (A3), wherein the plurality of protrusions (141) is arranged in an at least substantially or complete azimuthally symmetric manner with respect to the third axis (A3), wherein the plurality of protrusions (141) comprises in particular a number of N protrusions with N being an integer and N >1.

11. The transport system (100) according to any one of the preceding claims 6 to 10, wherein the transport system (100) is configured such that, during its operation, when the mechanically passive gate mechanism (125) is released and the first carrier (200a) is moving from the carrier position (121) along the first path (10) in the first direction (R1) with the first velocity (v1), in response to the carrier (200a) engaging with the second movable element (140), the movement of the first carrier (200a) is causing the second movable element (140) to rotate by 360/N degrees around the third axis (A3).

12. The transport system (100) according to any one of the preceding claims 6 to 11, wherein the transport system is configured such that, during its operation,
if the recess (111) is unoccupied and the mechanically passive gate mechanism (125) is released, and if the first movable element (131) of the mechanically passive gate mechanism (125) is mechanically disengaged from the second transport device (102) and from any further carrier (200c, 200d, 200e, 200f) transported by the second transport device (102) and if the first movable element (131) is mechanically engaged with the second movable element (140), a rotation of the second movable element (140) caused by the first carrier (200a) passing the mechanically passive gate mechanism, causes the first movable element (131) to pivot around the second axis (A2), thereby mechanically disengaging the first movable element (131) from the second movable element (140).

13. The transport system (100) according to any one of the preceding claims 6 to 12, wherein the transport system (100) is configured such that, during its operation, when the second movable element (140) is mechanically engaged with the first movable element (131) and with the first carrier (200a), a first protrusion (141a) of the second movable element (140) is mechanically engaged with the first movable element (131) and a second protrusion (141a) of the second movable element (140) is mechanically engaged with that carrier.

14. The transport system (100) according to any one of the preceding claims, further comprising a guiding element (160), wherein the first transport device (123), the second transport device (102), and the guiding element (160) are spatially positioned with respect to one another, and the transport system (100) is configured such that, during its operation, when the first carrier (200a) is moving along the first path (10) at the given first velocity (v1) in the given direction (R1) into the transferring region (150) with a first orientation, the guiding element (160) is able to engage at least over a defined length along the first path (10) with a first engagement region of that first carrier (200a), thereby at least temporarily precluding a modification of the orientation of that first carrier (200a) during further movement of said first carrier along the first path (10) in the first direction (R1) towards the transferring region (150), in particular until the first carrier (200a) entered the transferring region (150) and/or the recess (111).

15. The transport system (100) according to any one of the preceding claims, further comprising an orientating element (170), wherein the first transport device (123), the second transport device (102), the guiding element (160) and the orientating element (170) are spatially positioned with respect to one another, and the transport system (100) is configured such that, in operation, after the first carrier (200a) has been disposed in the recess (111) at the transferring region (150 in the given first orientation, when the second transport device (102) is moving that first carrier (200a) after receipt by the recess (111) along the second path (20) at the given second velocity (v2), a second engagement region of that carrier is mechanically engaging the orientating element (170), thereby orientating the first carrier (200a) in a given second orientation.

16. Method for transporting carriers (200a, 200b, 200c, 200d, 200e, 200f), comprising at least the following steps:
- transporting, by using a first transport device (123), carriers (200a, 200b) along a first path (10) at a given first velocity (v1) or directing carriers (200a, 200b) along a first path (10) which are being self-propelled and configured to move at a given first velocity;
- moving, by a second transport device (102), comprising at least one recess (111), the at least one recess (111) along a second path (20) at a given second velocity (v2), wherein the at least one recess (111) is configured to receive a carrier (200a, 200b, 200c, 200d, 200e, 200f);
- mechanically interrupting, by a mechanically passive gate mechanism (125), at least temporarily a movement of a first carrier (200a), which is moving with the given first velocity (v1) along the first path (10); and
- transferring, in a transferring region (150), at least one carrier (200a, 200b) from the first transport device (123) to the second transport device (102);
wherein the movement of the first carrier (200a) with the given first velocity (v1) is interrupted at least temporarily at least in the first direction (R1) along the first path (10):
if no further carrier (200c, 200d, 200e, 200f) is already disposed in the recess (111), and whilst the second transport device (102) is moving the recess (111) along a defined first portion of the second path (20) over a defined first length at the given second velocity (v2), the second transport device (102), in particular a portion of an outer wall (113) of the second transport device (102), is mechanically engaging with the mechanically passive gate mechanism (125), thereby causing the mechanically passive gate mechanism (125) to mechanically prevent the first carrier (200a) from moving at least from a carrier position (121) at least in a first direction (R1) along the first path (10) at least with the first velocity (v1);
if the recess (111) is already occupied by a further carrier (200c, 200d, 200e, 200f) disposed within the recess (111), and whilst the second transport device (102) is moving the recess (111) with the further carrier (200c, 200d, 200e, 200f) disposed therein along a defined second portion of the second path (20) over a defined second length at the given second velocity (v2), the further carrier (200c, 200d, 200e, 200f) disposed in the recess (111) is mechanically engaging with the mechanically passive gate mechanism (125), thereby causing the mechanically passive gate mechanism (125) to mechanically prevent the first carrier (200a) from moving at least from the carrier position (121) at least in the first direction (R1) along the first path (10) at least with the first velocity (v1).

17. Method according to claim 16, wherein a transport system (100) according to any one of the claims 1 to 15 is used.
